# EUROPÄISCHE PATENTANMELDUNG

(11) **EP 3 150 360 A1**
(43) Veröffentlichungstag der Anmeldung: **05.04.2017**
(21) Anmeldenummer: 15187996.2
(22) Anmeldetag: 01.10.2015
(51) Int. Cl.: B29C 65/14, B29C 65/00, B32B 37/04, B29C 44/56, C08J 5/12

(54) **VERFAHREN ZUR HERSTELLUNG EINSEITIG STRUKTURIERTER SCHAUMSTOFFPLATTEN**

(71) Anmelder: BASF SE, 67056 Ludwigshafen am Rhein (DE)
(72) Erfinder: MERKEL, Peter, 67308 Zellerthal (DE); HAHN, Christoph, Olivier, 67454 Hassloch (DE); KICIAK, Thomas, 67071 Ludwigshafen (DE); DIETZEN, Franz/Josef, 67454 Hassloch (DE)
(74) Vertreter: Ellwanger, Arndt

(57) **Zusammenfassung**

Die vorliegende Erfindung betrifft ein Verfahren zur Herstellung einer zumindest zweilagigen einseitig strukturierten thermoplastischen Schaumstoffplatte. Bei dem erfindungsgemäßen Verfahren werden eine erste dünnere thermoplastische Schaumstoffpiatte (T1) und eine zweite dünnere thermoplastische Schaumstoffplatte (T2) eingesetzt, die jeweils eine erste Seite und eine zweite Seite aufweisen. Die erste Seite (S1-1) der ersten dünneren thermoplastischen Schaumstoffplatte (T1) wird strukturiert, die zweite Seite (S2-1) der ersten dünneren thermoplastischen Schaumstoffplatte (T1) wird von der Schäumhaut befreit. Die erste Seite (S1-2) der zweiten dünneren thermoplastischen Schaumstoffplatte (T2) wird ebenfalls von der Schäumhaut befreit. Anschließend werden die zweite Seite (S2-1) der ersten dünneren thermoplastischen Schaumstoffplatte (T1) und die erste Seite (S1-2) der zweiten dünneren thermoplastischen Schaumstoffplatte (T2) miteinander verbunden. Die vorliegende Erfindung betrifft außerdem die zumindest zweilagige einseitig strukturierte thermoplastische Schaumstoffplatte als solche.

## Beschreibung

Die vorliegende Erfindung betrifft ein Verfahren zur Herstellung einer zumindest zweilagigen einseitig strukturierten thermoplastischen Schaumstoffplatte. Bei dem erfindungsgemäßen Verfahren werden eine erste dünnere thermoplastische Schaumstoffplatte (T1) und eine zweite dünnere thermoplastische Schaumstoffplatte (T2) eingesetzt, die jeweils eine erste Seite und eine zweite Seite aufweisen. Die erste Seite (S1-1) der ersten dünneren thermoplastischen Schaumstoffplatte (T1) wird strukturiert, die zweite Seite (S2-1) der ersten dünneren thermoplastischen Schaumstoffplatte (T1) wird von der Schäumhaut befreit. Die erste Seite (S1-2) der zweiten dünneren thermoplastischen Schaumstoffplatte (T2) wird ebenfalls von der Schäumhaut befreit. Anschließend werden die zweite Seite (S2-1) der ersten dünneren thermoplastischen Schaumstoffplatte (T1) und die erste Seite (S1-2) der zweiten dünneren thermoplastischen Schaumstoffplatte (T2) miteinander verbunden. Die vorliegende Erfindung betrifft außerdem die zumindest zweilagige einseitig strukturierte thermoplastische Schaumstoffplatte als solche.

Thermoplastische Schaumstoffplatten besitzen einen breiten Anwendungsbereich. Sie sind insbesondere geeignet zum Einsatz im Bereich der Isolation von z.B. Gebäuden. Thermoplastische Schaumstoffplatten, insbesondere durch Extrusion hergestellte thermoplastische Schaumstoffplatten, besitzen nicht nur gute wärmeisolierende Eigenschaften aufgrund ihrer niedrigen Wärmeleitfähigkeit, sondern weisen zudem auch durch die glatte Schäumhaut auf beiden Seiten der Oberfläche eine geringe Wasseraufnahme auf. Dies ist ebenfalls vorteilhaft für den Einsatz im Bereich der Isolation.

Nachteilig ist allerdings, dass die Oberflächen aufgrund der glatten Schäumhaut nur eine geringe Haftung auf üblichen Baumaterialien, wie etwa Zement, Mörtel, Beton und Putz aufweisen.

Um die Haftung zwischen den Oberflächen der thermoplastischen Schaumstoffplatten und den üblichen Baumaterialien zu verbessern, kann beispielsweise die Oberfläche der thermoplastischen Schaumstoffplatten strukturiert werden. Hierzu sind im Stand der Technik verschiedene Verfahren beschrieben.

DE 10 003 808 A1 beschreibt ein Verfahren zur Oberflächenprägung von thermoplastischen Schaumstoffplatten, insbesondere von extrudierten Polystyrolschaumplatten. In diesem Verfahren wird die Oberfläche der thermoplastischen Schaumstoffplatten um ca. 2 bis 3 mm durch eine beheizte Prägewalze plastifiziert und so nachgeschäumt. Dadurch bilden sich Strukturierungen an der Oberfläche. Bei dem Verfahren der DE 10 003 808 A1 werden thermoplastische Schaumstoffplatten erhalten, die auf zwei gegenüberliegenden Seiten strukturiert sind.

Nachteilig bei der beidseitigen Strukturierung von thermoplastischen Schaumstoffplatten ist, dass die Wasseraufnahme der thermoplastischen Schaumstoffplatten erhöht wird, da auf beiden Seiten die Oberflächen offener sind als ohne Strukturierung und dadurch leichter Wasser in die Schaumstoffplatten diffundiert. In dem in DE 10 003 808 A1 beschriebenen Verfahren ist zudem nachteilig, dass die Strukturierung kurz nach der Herstellung der thermoplastischen Schaumstoffplatte durchgeführt werden muss, da ein Nachschäumen nur so lange möglich ist, wie die thermoplastische Schaumstoffplatte noch Treibmittel enthält.

Die CH 687450 A5 beschreibt ebenfalls die Herstellung von strukturierten thermoplastischen Schaumstoffplatten. Dabei wird eine thermoplastische Schaumstoffplatte über mindestens ein beheiztes Prägewerkzeug geführt, wodurch die Außenhaut der thermoplastischen Schaumstoffplatte zu fließen beginnt und sich verformt. Dabei bilden sich die Strukturierungen. In dem in CH 687450 A5 beschriebenen Verfahren kann entweder eine thermoplastische Schaumstoffplatte auf zwei gegenüberliegenden Seiten strukturiert werden oder es können zwei thermoplastische Schaumstoffplatten übereinander gelegt werden und so jeweils auf einer Seite strukturiert werden. Die jeweilige Seite, an denen die beiden thermoplastischen Schaumstoffplatten miteinander in Kontakt sind, wird dann nicht strukturiert.

Nachteilig bei dem in CH 687450 A5 beschriebenen Verfahren ist, dass nur eine Strukturierung auf zwei Seiten der thermoplastischen Schaumstoffplatte möglich ist. Somit wird die Wasseraufnahme wie vorstehend beschrieben erhöht. Eine einseitige Strukturierung ist nur möglich, wenn zwei Platten übereinander gelegt werden. Dabei verziehen sich die einseitig strukturierten thermoplastischen Schaumstoffplatten allerdings (sogenanntes "Schüsseln"). Eine Verwendung dieser thermoplastischen Schaumstoffplatten im Bausektor ist dann, wenn überhaupt, nur noch begrenzt möglich.

Die der vorliegenden Erfindung zugrunde liegende Aufgabe besteht darin, ein neues Verfahren zur Herstellung von einseitig strukturierten thermoplastischen Schaumstoffplatten bereitzustellen, die keinen oder nur einen geringen Verzug aufweisen.

Gelöst wird diese Aufgabe durch ein Verfahren zur Herstellung einer zumindest zweilagigen einseitig strukturierten thermoplastischen Schaumstoffplatte, umfassend die Schritte a) bis f):
a) Bereitstellen einer ersten dünneren thermoplastischen Schaumstoffplatte (T1), die eine erste Seite (S1-1) und eine zweite Seite (S2-1) aufweist, wobei die erste Seite (S1-1) und die zweite Seite (S2-1) jeweils eine Schäumhaut aufweisen,
b) Bereitstellen einer zweiten dünneren thermoplastischen Schaumstoffplatte (T2), die eine erste Seite (S1-2) und eine zweite Seite (S2-2) aufweist, wobei die erste Seite (S1-2) und die zweite Seite (S2-2) jeweils eine Schäumhaut aufweisen,
c) Einbringen von Strukturierungen in die erste Seite (S1-1) der ersten dünneren thermoplastischen Schaumstoffplatte (T1),
d) Entfernen der Schäumhaut von der zweiten Seite (S2-1) der ersten dünneren thermoplastischen Schaumstoffplatte (T1),
e) Entfernen der Schäumhaut von der ersten Seite (S1-2) der zweiten dünneren thermoplastischen Schaumstoffplatte (T2),
f) Verbinden der zweiten Seite (S2-1) der ersten dünneren thermoplastischen Schaumstoffplatte (T1) mit der ersten Seite (S1-2) der zweiten dünneren thermoplastischen Schaumstoffplatte (T2) unter Erhalt der zumindest zweilagigen einseitig strukturierten thermoplastischen Schaumstoffplatte.

Es wurde überraschend gefunden, dass durch das erfindungsgemäße Verfahren die erhaltenen zumindest zweilagigen einseitig strukturierten thermoplastischen Schaumstoffplatten eben bleiben und sich somit nicht verziehen und nicht schüsseln.

Im Rahmen der vorliegenden Erfindung wird unter "nicht verziehen" und "nicht schüsseln" verstanden, dass auf eine Länge von 1250 mm sich die zumindest zweilagige einseitig strukturierte thermoplastische Schaumstoffplatte um höchstens 5 mm, bevorzugt im Bereich von 0 bis 2,5 mm und insbesondere bevorzugt im Bereich von 0 bis 1,5 mm verzieht. Der Verzug wird bestimmt gemäß DIN EN 825 (Wärmedämmstoffe für das Bauwesen - Bestimmung der Ebenheit; 2013).

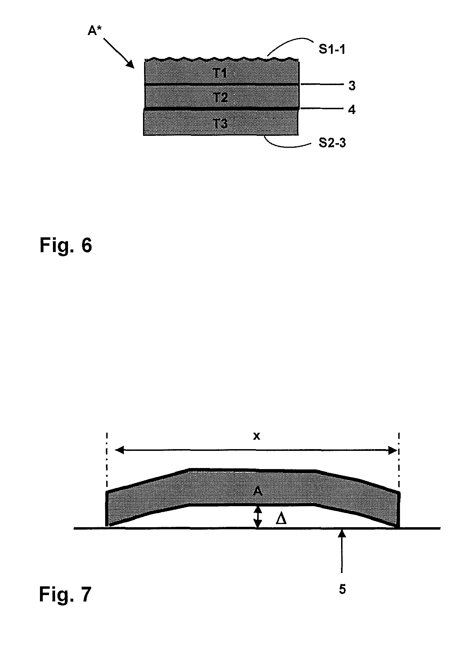

Figur 7 zeigt beispielhaft, wie der Verzug der zumindest zweilagigen einseitig strukturierten thermoplastischen Schaumstoffplatte A bestimmt wird. Die erhaltene zumindest zweilagige einseitig strukturierte thermoplastische Schaumstoffplatte A mit einer Länge x von 1250 mm wird mit ihrer konkaven Seite auf eine planare Fläche 5 gelegt. Der Abstand Δ zwischen der planaren Fläche 5 und der gewölbten Mitte der zumindest zweilagigen einseitig strukturierten thermoplastischen Schaumstoffplatte A entspricht der Schüsselung. Der Abstand Δ und somit auch die Schüsselung liegen bei höchstens 5 mm, bevorzugt im Bereich von 0 bis 2,5 mm und insbesondere bevorzugt im Bereich von 0 bis 1,5 mm bei einer Länge x der zumindest zweilagigen einseitig strukturierten thermoplastischen Schaumstoffplatte A von 1250 mm.

Durch die erfindungsgemäß hergestellte zumindest zweilagige einseitig strukturierte thermoplastische Schaumstoffplatte wird zudem eine besonders gute Haftzugfestigkeit zwischen Putz und/oder Beton und der strukturierten Seite der zumindest zweilagigen einseitig strukturierten thermoplastischen Schaumstoffplatte erzielt. Die Haftzugfestigkeit liegt beispielsweise bei mindestens 50 kPa, bevorzugt bei mindestens 100 kPa und besonders bevorzugt bei mindestens 200 kPa, gemessen nach DIN EN 1607 (2013), an Proben nach DIN EN 13494 (2003).

Die erfindungsgemäß hergestellten zumindest zweilagigen einseitig strukturierten thermoplastischen Schaumstoffplatten weisen zudem eine geringe Wasseraufnahme auf, da vorzugsweise die Schäumhaut auf der nicht strukturierten Seite nicht entfernt wird und diese somit weiterhin als Barriere für Wasser dient.

In einer bevorzugten Ausführungsform des erfindungsgemäßen Verfahrens wird die zweite Seite (S2-1) der ersten dünneren thermoplastischen Schaumstoffplatte (T1) mit der ersten Seite (S1-2) der zweiten dünneren thermoplastischen Schaumstoffplatte (T2) verbunden durch Verschweißen, wobei mindestens zwei Heizelemente auf parallel zueinander versetzten Ebenen, eingesetzt werden. Ebenso ist es erfindungsgemäß bevorzugt, dass bei dem in einer bevorzugten Ausführungsform durchgeführten Schritt j) die zweite Seite (S2-2) der zweiten dünneren thermoplastischen Schaumstoffplatte (T2) mit der ersten Seite (S1-3) der dritten dünneren thermoplastischen Schaumstoffplatte (T3) verbunden wird durch Verschweißen, wobei zum Verschweißen mindestens zwei Heizelemente auf parallel zueinander versetzten Ebenen eingesetzt werden. In beiden Fällen berühren sich die erste Seite, die zweite Seite und die Heizelemente nicht gegenseitig.

Das erfindungsgemäße Verfahren ist dann von seinem Prinzip her ein sogenanntes "kontaktloses Verschweißen" (oder "berührungsloses Erhitzen"), da die Wärmeübertragung von den Heizelementen auf die zu verschweißenden Seiten der dünneren thermoplastischen Schaumstoffplatten (auch als "Ausgangsplatten" bezeichnet) ohne direkten Kontakt zwischen Heizelement und Ausgangsplatte stattfindet. Dies hat den Vorteil, dass im erfindungsgemäßen Verfahren keine (oder nur in sehr geringem Umfang) Dellen bzw. Einfallsstellen auf der ersten Seite und der zweiten Seite der zu verschweißenden Ausgangsplatten gebildet werden. Diese Einfallsstellen sind insbesondere in den Randbereichen der Ausgangsplatten ein generelles Problem bei Verfahren, die auf einem direktem Kontakt zwischen Heizelement und den zu verschweißenden Seiten beruhen. Solche Dellen/Einfallsstellen führen zu verstärkten Inhomogenitäten in der Schweißnaht, was sich wiederum (wie nachfolgend ausgeführt) negativ auf die Stabilität sowie auf das Brandverhalten der zumindest zweilagigen einseitig strukturierten thermoplastischen Schaumstoffplatte auswirken kann.

Bei der Verwendung von zumindest zwei Heizelementen, die auf parallel zueinander versetzten Ebenen und ohne direkten Kontakt mit den zu verschweißenden Ausgangsplatten in einer bevorzugten Ausführungsform des erfindungsgemäßen Verfahrens eingesetzt werden, ist als weiterer Vorteil festzuhalten, dass die zu verschweißenden Seiten der Ausgangsplatten in einem weit geringerem Maße einer unterschiedlichen Wärmebelastung ausgesetzt sind als im Vergleich zu Verfahren, die im Stand der Technik beschrieben sind. Auch dies beeinflusst die Homogenität der Schweißnaht positiv.

In diesem Zusammenhang ist auch zu berücksichtigen, dass bei beweglichen Heizelementen durch die Dynamik des Ein- oder Ausfahrens der Heizelemente zwischen die zu verschweißenden Ausgangsplatten kalte Luft hinter den Heizelementen hergezogen wird, während hingegen warme Luft vor den Heizelementen aus dem Zwischenraum hinausgeschoben wird. Die auf diese Weise eintretende Pfropfenströmung oder turbulente Strömung zwischen den zu verschweißenden Platten hat wiederum negative Auswirkung auf die Homogenität und somit die Stabilität der Schweißnaht. Durch die bevorzugte Verwendung von zwei beweglichen Heizelementen auf zueinander parallelen Ebenen, wird hingegen Luft nur in einem deutlich geringerem Maße verdrängt und führt daher nicht zu einem unkontrollierten Ein- und Ausströmen von kalter oder heißer Luft. Insbesondere wenn im erfindungsgemäßen Verfahren mindestens zwei Heizelemente verwendet werden, die auf parallelen Ebenen aus zueinander entgegengesetzten Richtungen in den Zwischenraum zwischen den Ausgangsplatten eingeführt werden, kann das Problem der Pfropfenströmung bzw. der turbulenten Strömung deutlich minimiert werden und eine noch homogenere Schweißnaht zwischen den zu verschweißenden Ausgangsplatten erzielt werden. Dieser Effekt kann weiterhin verstärkt werden, wenn auch das Ausfahren der beiden Heizelemente in jeweils entgegengesetzter Richtung erfolgt. Besonders vorteilhaft ist dabei das Einfahren und Ausfahren der einzelnen Platten ohne Richtungsänderung, weil dadurch das Verfahren schneller durchgeführt werden kann im Vergleich zu einer Variante mit Richtungsumkehr der beiden Heizelemente beim Ausfahrschritt im Vergleich zum Einfahrschritt.

Die in einer bevorzugten Ausführungsform gebildeten Schweißnähte zeichnen sich also durch eine hohe Stabilität sowie insbesondere Homogenität aus. Die Schweißnähte sind dann homogen, wenn sich die Schweißnahtdicke über die gesamte Ausdehnung der Schweißnaht überhaupt nicht oder in einem nur geringen Ausmaß ändert.

Nachfolgend wird das erfindungsgemäße Verfahren näher erläutert.

Die erfindungsgemäß hergestellte einseitig strukturierte thermoplastische Schaumstoffplatte ist zumindest zweilagig. Sie kann also genau zwei Lagen aufweisen oder dreilagig, vierlagig, fünflagig oder noch höherlagig sein. Die Anzahl der Lagen der einseitig strukturierten thermoplastischen Schaumstoffplatte ergibt sich aus der Anzahl der dünneren thermoplastischen Schaumstoffplatten, die miteinander verbunden werden. Es versteht sich von selbst, dass auch höherlagige einseitig strukturierte thermoplastische Schaumstoffplatten an genau einer Seite strukturiert sind.

Im Falle einer zweilagigen thermoplastischen Schaumstoffplatte werden also zwei dünnere thermoplastische Schaumstoffplatten miteinander verbunden. Bei einer drei- oder vierlagigen thermoplastischen Schaumstoffplatte werden somit drei bzw. vier dünnere thermoplastische Schaumstoffplatten miteinander verbunden. Sofern noch höherlagige thermoplastische Schaumstoffplatten hergestellt werden sollen, beispielsweise eine zehnlagige thermoplastische Schaumstoffplatten, müssen demzufolge die der Anzahl der Lagen entsprechende Anzahl an dünneren thermoplastischen Schaumstoffplatten, beispielsweise zehn dünnere thermoplastische Schaumstoffplatten miteinander verbunden werden. Vorzugsweise ist die erfindungsgemäße einseitig strukturierte thermoplastische Schaumstoffplatte zweilagig, dreilagig oder vierlagig, insbesondere ist die erfindungsgemäße einseitig strukturierte thermoplastische Schaumstoffplatte zweilagig.

Die dünneren thermoplastischen Schaumstoffplatten, die miteinander verbunden werden, werden auch als "Ausgangsplatten" bezeichnet.

Die verwendeten dünneren thermoplastischen Schaumstoffplatten entsprechen hinsichtlich Ihrer chemischen Zusammensetzung den im Rahmen des erfindungsgemäßen Verfahrens hergestellten zumindest zweilagigen einseitig strukturierten thermoplastischen Schaumstoffplatten (ohne Berücksichtigung der im Rahmen des Verbindungsvorgangs optional auf die Oberflächen aufgebrachten Komponenten bzw. ohne Berücksichtigung der in Folge der in einer bevorzugten Ausführungsform ausgebildeten Schweißnaht an den entsprechenden Seiten auftretenden chemischen Veränderungen/Reaktionen).

Die miteinander zu verbindenden dünneren thermoplastischen Schaumstoffplatten weisen vorzugsweise dieselbe Dimension und/oder dieselbe chemische Zusammensetzung auf. Gegebenenfalls können aber auch dünnere thermoplastische Schaumstoffplatten mit unterschiedlichen Dimensionen und/oder unterschiedlichen chemischen Zusammensetzungen miteinander verbunden werden.

In Schritt a) des erfindungsgemäßen Verfahrens wird eine erste dünnere thermoplastische Schaumstoffplatte (T1) bereitgestellt.

Zum Bereitstellen der ersten dünneren thermoplastischen Schaumstoffplatte (T1) eignen sich alle dem Fachmann bekannten Methoden. Beispielsweise kann die erste dünnere thermoplastische Schaumstoffplatte (T1) durch ein Partikelschäumverfahren oder ein Extrusionsverfahren bereitgestellt werden. Bevorzugt wird die erste dünnere thermoplastische Schaumstoffplatte (T1) durch ein Extrusionsverfahren bereitgestellt.

Wird die erste dünnere thermoplastische Schaumstoffplatte (T1) durch ein Partikelschäumverfahren hergestellt, so ist die erste dünnere thermoplastische Schaumstoffplatte (T1) ein Partikelschaumstoff. Wird die erste dünnere thermoplastische Schaumstoffplatte (T1) durch ein Extrusionsverfahren bereitgestellt, so ist die erste dünnere thermoplastische Schaumstoffplatte (T1) ein Extrusionsschaumstoff.

Geeignete erste dünnere thermoplastische Schaumstoffplatten (T1) sind dem Fachmann als solche bekannt. Geeignete erste dünnere thermoplastische Schaumstoffplatten (T1) sind beispielsweise in Form von *Blends* in der WO 2009/047487 offenbart. Beispielsweise kann die erste dünnere thermoplastische Schaumstoffplatte (T1) aus amorphen, teilkristallinen oder kristallinen Schaumstoffen hergestellt sein.

Üblicherweise enthält die erste dünnere thermoplastische Schaumstoffplatte (T1) ein Polymer. Unter "ein Polymer" wird im Rahmen der vorliegenden Erfindung sowohl genau ein Polymer als auch eine Mischung aus zwei oder mehr Polymeren verstanden.

Als in der ersten dünneren thermoplastischen Schaumstoffplatte (T1) enthaltenes Polymer eignen sich alle dem Fachmann bekannten Polymere. Bevorzugt ist das Polymer, das in der ersten dünneren thermoplastischen Schaumstoffplatte (T1) enthalten ist, ausgewählt aus der Gruppe bestehend aus Polystyrol, Styrolcopolymeren, Polyethersulfon, Polysulfon, Polyethylenterephthalat, Polyurethan, Polyolefinen, Polyolefincopolymeren und Acrylpolymeren. Bevorzugt ist das in der ersten dünneren thermoplastischen Schaumstoffplatte (T1) üblicherweise enthaltene mindestens eine Polymer ausgewählt aus der Gruppe bestehend aus Polystyrol, Polystyrolcopolymeren, Polyethersulfon, Polysulfon, thermoplastischem Polyurethan und Polyethylenterephthalat. Insbesondere bevorzugt ist das Polymer ausgewählt aus der Gruppe bestehend aus Polystyrol, Polystyrolcopolymeren und Polyethylenterephthalat.

Erfindungsgemäß bevorzugt ist die in Schritt a) bereitgestellte erste dünnere thermoplastische Schaumstoffplatte (T1), also ein Partikelschaumstoff oder ein Extrusionsschaumstoff auf Basis eines Polymers, ausgewählt aus der Gruppe bestehend aus Polystyrol, Polystyrolcopolymeren, Polyethersulfon, Polysulfon, Polyethylenterephthalat, Polyurethan, Polyolefinen, Polyolefincopolymeren und Acrylpolymeren, vorzugsweise ein Extrusionsschaumstoff auf Basis eine Polymers, ausgewählt aus der Gruppe bestehend Polystyrol, Polystyrolcopolymeren, Polyethersulfon, Polysulfon, thermoplastischem Polyurethan und Polyethylenterephthalat, am meisten bevorzugt ein Extrusionsschaumstoff auf Basis eines Polymers, ausgewählt aus der Gruppe bestehend aus Polystyrol, Polystyrolcopolymeren und Polyethylenterephthalat.

Geeignete Polyolefine sind beispielsweise Polyethylen und/oder Polypropylen.

Polystyrolcopolymere werden auch als "aus Styrol hergestellte Copolymere" oder als "Styrolcopolymerisate" bezeichnet. Ist das in der ersten dünneren thermoplastischen Schaumstoffplatte (T1) üblicherweise enthaltene Polymer ein Polystyrolcopolymer, bedeutet dies, dass zur Herstellung des Polymers, neben dem monomeren Styrol, mindestens ein weiteres Monomer (Comonomer) erforderlich ist. Als Comonomere zu Styrol eignen sich prinzipiell alle mit Styrol polymerisierbaren Monomere. Vorzugsweise sind mindestens 50 Gew.-% Styrol in dem Polystyrolcopolymer einpolymerisiert, bezogen auf das Gesamtgewicht des Polystyrolcopolymers.

Vorzugsweise weist ein aus Styrol hergestelltes Copolymer als Comonomer zu Styrol, ein Monomer auf, dass ausgewählt ist aus α-Methylstyrol, kernhalogenierten Styrolen, kernalkylierten Styrolen, Acrylnitril, Acrylsäureestern, Methacrylsäureestern, N-Vinylverbindungen, Maleinsäureanhydrid, Butadien, Divinylbenzol und Butandioldiacrylat. Acrylsäureester sowie Methacrylsäureester sind vorzugsweise erhältlich aus Alkoholen mit einem bis acht Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-StyrolCopolymere (ABS).

Ist die erste dünnere thermoplastische Schaumstoffplatte (T1) ein Partikelschaumstoff, so ist der Partikelschaumstoff vorzugsweise Styropor, Neopor oder E-Por, die kommerziell von der BASF SE erhältlich sind. In diesem ist das Polymer ein Polystyrol, ein Polystyrolcopolymer oder eine Mischung aus Polystyrol oder einem Polystyrolcopolymer mit mindestens einem weiteren Polymer. Mischungen aus Polystyrol oder einem Polystyrolcopolymer mit mindestens einem weiteren Polymer werden auch als *Blends* bezeichnet. Als mindestens ein weiteres Polymer eignen sich alle dem Fachmann bekannten Polymere, wie beispielsweise die vorstehend beschriebenen Polymere.

Am meisten bevorzugt ist die erste dünnere thermoplastische Schaumstoffplatte (T1) ein Extrusionsschaumstoff aus einem extrudierten Polystyrol, der beispielsweise unter der Bezeichnung "Styrodur" von der BASF SE kommerziell erhältlich ist.

Die Dimension der ersten dünneren thermoplastischen Schaumstoffplatte (T1) ist beliebig. Hinsichtlich ihrer Länge und Breite kann sie Maße im Zentimeter-Bereich bis hin zu mehreren Metern aufweisen. Hinsichtlich ihrer dritten Dimension (Dicke) sind theoretisch ebenfalls beliebige Maße denkbar. In der Praxis weist die erste dünnere thermoplastische Schaumstoffplatte (T1) üblicherweise eine Dicke im Bereich von 20 bis 200 mm, vorzugsweise im Bereich von 50 bis 100 mm auf.

Bezogen auf ein rechtwinkliges Koordinatensystem wird erfindungsgemäß die Länge der ersten dünneren thermoplastischen Schaumstoffplatte (T1) auch als x-Richtung bezeichnet, die entsprechende Breite als y-Richtung und die Dicke als z-Richtung. Erfindungsgemäß bevorzugt weist die in Schritt a) bereitgestellte erste dünnere thermoplastische Schaumstoffplatte (T1) eine Länge (x-Richtung) im Bereich von 500 bis 2800 mm, vorzugsweise im Bereich von 1000 bis 1500 mm, eine Breite (y-Richtung) im Bereich von 500 bis 1250 mm, vorzugsweise im Bereich von 500 bis 900 mm und eine Dicke (z-Richtung) im Bereich von 20 bis 200 mm, vorzugsweise im Bereich von 50 bis 100 mm auf.

Die erste dünnere thermoplastische Schaumstoffplatte (T1) kann eine beliebige Dichte aufweisen. Vorzugsweise weist die erste dünnere thermoplastische Schaumstoffplatte (T1) eine Dichte von ≤ 200 g/l, bevorzugt eine Dichte von ≤ 100 g/l, insbesondere bevorzugt von ≤ 50 g/l auf. Üblicherweise erfolgt die Bestimmung der Dichte nach DIN EN 1602, Stand 2013.

Erfindungsgemäß weist die erste dünnere thermoplastische Schaumstoffplatte (T1) eine erste Seite (S1-1) und eine zweite Seite (S2-1) auf. Die erste Seite (S1-1) und die zweite Seite (S2-1) weisen jeweils eine Schäumhaut auf. Bei Extrusionsschaumstoffen wird die Schäumhaut auch als Extrusionshaut bezeichnet.

Die erste Seite (S1-1) der ersten dünneren thermoplastischen Schaumstoffplatte (T1) und die zweite Seite (S2-1) der ersten dünneren thermoplastischen Schaumstoffplatte (T1) bilden jeweils eine Oberfläche der ersten dünneren thermoplastischen Schaumstoffplatte (T1). Die erste Seite (S1-1) der ersten dünneren thermoplastischen Schaumstoffplatte (T1) wird daher auch als erste Oberfläche der ersten dünneren thermoplastischen Schaumstoffplatte (T1) bezeichnet, die zweite Seite (S2-1) der ersten dünneren thermoplastischen Schaumstoffplatte (T1) wird daher auch als zweite Oberfläche der ersten dünneren thermoplastischen Schaumstoffplatte (T1) bezeichnet.

Erfindungsgemäß bevorzugt liegt die erste Seite (S1-1) der ersten dünneren thermoplastischen Schaumstoffplatte (T1) der zweiten Seite (S2-1) der ersten dünneren thermoplastischen Schaumstoffplatte (T1) gegenüber.

Des Weiteren ist es bevorzugt, dass die erste Seite (S1-1) und/oder die zweite Seite (S2-1) der ersten dünneren thermoplastischen Schaumstoffplatte (T1) die flächenmäßig größte Seite der ersten dünneren thermoplastischen Schaumstoffplatte (T1) ist.

Es ist außerdem bevorzugt, dass die erste Seite (S1-1) parallel zur zweiten Seite (S2-1) der ersten dünneren thermoplastischen Schaumstoffplatte (T1) angeordnet ist.

Dem Fachmann ist klar, dass die erste Seite (S1-1) und die zweite Seite (S2-1) durch die Schäumhaut im Wesentlichen planar sind. Unter "im Wesentlichen planar" wird im Rahmen der vorliegenden Erfindung verstanden, dass die erste Seite (S1-1) und die zweite Seite (S2-1) auch Vertiefungen und/oder Vorsprünge enthalten können, die entsprechenden Vertiefungen und/oder Vorsprünge sind jedoch willkürlich über die erste Seite (S1-1) und die zweite Seite (S2-1) verteilt. Bei den Vertiefungen und/oder Vorsprüngen handelt es sich also nicht um Strukturierungen.

In Schritt b) des erfindungsgemäßen Verfahrens wird eine zweite dünnere thermoplastische Schaumstoffplatte (T2) bereitgestellt. Die zweite dünnere thermoplastische Schaumstoffplatte (T2) weist eine erste Seite (S1-2) und eine zweite Seite (S2-2) auf, wobei die erste Seite (S1-2) und die zweite Seite (S2-2) jeweils eine Schäumhaut aufweisen.

Für die zweite dünnere thermoplastische Schaumstoffplatte (T2) sowie die erste Seite (S1-2) und die zweite Seite (S2-2) der zweiten dünneren thermoplastischen Schaumstoffplatte (T2) gelten die zuvor beschriebenen Ausführungen und Bevorzugungen für die erste dünnere thermoplastische Schaumstoffplatte (T1) und die erste Seite (S1-1) und die zweite Seite (S2-1) der ersten dünneren thermoplastischen Schaumstoffplatte (T1) entsprechend.

Daher ist es erfindungsgemäß ebenfalls bevorzugt, dass die in Schritt b) bereitgestellte zweite dünnere thermoplastische Schaumstoffplatte (T2) ein Partikelschaumstoff oder ein Extrusionsschaumstoff ist, auf Basis eines Polymers, ausgewählt aus der Gruppe bestehend aus Polystyrol, Polystyrolcopolymeren, Polyethersulfon, Polysulfon, Polyethylenterephthalat, Polyuretan, Polyolefinen, Polyolefincopolymeren und Acrylpolymeren, vorzugsweise ein Extrusionsschaumstoff auf Basis eine Polymers, ausgewählt aus der Gruppe bestehend aus Polystyrol, Polystyrolcopolymeren, Polyethersulfon, Polysulfon, thermoplastischem Polyurethan und Polyethylenterephthalat. Am meisten bevorzugt ein Extrusionsschaumstoff auf Basis eines Polymers, ausgewählt aus der Gruppe bestehend aus Polystyrol, Polystyrolcopolymeren und Polyethylenterephthalat.

Des Weiteren ist es erfindungsgemäß bevorzugt, dass die in Schritt b) bereitgestellte zweite dünnere thermoplastische Schaumstoffplatte (T2) eine Länge (x-Richtung) im Bereich von 500 bis 2800 mm, vorzugsweise im Bereich von 1000 bis 1500 mm, eine Breite (y-Richtung) im Bereich von 500 bis 1250 mm, vorzugsweise im Bereich von 500 bis 900 mm und eine Dicke (z-Richtung) im Bereich von 20 bis 200 mm, vorzugsweise im Bereich von 50 bis 100 mm aufweist.

Es ist außerdem bevorzugt, dass die erste Seite (S1-2) der zweiten dünneren thermoplastischen Schaumstoffplatte (T2) der zweiten Seite (S2-2) der zweiten dünneren thermoplastischen Schaumstoffplatte (T2) gegenüber liegt.

Ebenso ist es bevorzugt, dass die erste Seite (S1-2) und/oder die zweite Seite (S2-2) der zweiten dünneren thermoplastischen Schaumstoffplatte (T2) die flächenmäßig größte Seite der zweiten dünneren thermoplastischen Schaumstoffplatte (T2) ist.

In Schritt c) des erfindungsgemäßen Verfahrens werden Strukturierungen in die erste Seite (S1-1) der ersten dünneren thermoplastischen Schaumstoffplatte (T1) eingebracht.

Verfahren zum Einbringen von Strukturierungen in die erste Seite (S1-1) der ersten dünneren thermoplastischen Schaumstoffplatte (T1) sind dem Fachmann als solche bekannt. Bevorzugt werden die Strukturierungen in die erste Seite (S1-1) der ersten dünneren thermoplastischen Schaumstoffplatte (T1) in Schritt c) eingebracht durch Fräsen und/oder Prägen. Ebenso ist es möglich, die Strukturierungen einzubringen durch Hobeln.

Verfahren zum Hobeln, Fräsen und/oder Prägen sind dem Fachmann als solche bekannt.

Bevorzugt werden in Schritt c) zusätzlich Strukturierungen in die zweite Seite (S2-1) der ersten dünneren thermoplastischen Schaumstoffplatte (T1) eingebracht, wobei Schritt c) vor Schritt d) durchgeführt wird. Mehr bevorzugt werden in Schritt c) zusätzlich Strukturierungen in die zweite Seite (S2-1) der ersten dünneren thermoplastischen Schaumstoffplatte (T1) eingebracht durch Fräsen und/oder Prägen, wobei Schritt c) vor Schritt d) durchgeführt wird.

Es ist darüber hinaus bevorzugt, dass in Schritt c) zusätzlich Strukturierungen in die zweite Seite (S2-1) der ersten dünneren thermoplastischen Schaumstoffplatte (T1) gleichzeitig mit den Strukturierungen in die erste Seite (S1-1) der ersten dünneren thermoplastischen Schaumstoffplatte (T1) eingebracht werden.

Verfahren hierzu sind dem Fachmann bekannt.

Werden beispielsweise die Strukturierungen in die ersten Seite (S1-1) und in die zweite Seite (S2-1) durch Prägen eingebracht, können hierfür zum Beispiel Prägewalzen eingesetzt werden. Liegen sich die erste Seite (S1-1) und die zweite Seite (S2-1) gegenüber, so können beispielsweise zwei sich gegenüberliegende Prägewalzen eingesetzt werden, zwischen denen die erste dünnere thermoplastische Schaumstoffplatte (T1) hindurchgeführt wird, so dass die Strukturierungen in Schritt c) gleichzeitig in die erste Seite (S1-1) und in die zweite Seite (S2-1) eingebracht werden.

Die in Schritt c) eingebrachten Strukturierungen werden im Rahmen der vorliegenden Erfindung auch als "Muster" oder "Strukturierungsmuster" bezeichnet. Eine Strukturierung ist aus mindestens einer Strukturform, die auch als "Struktureinheit" bezeichnet werden kann, aufgebaut. Unter einer Struktureinheit (Strukturform) wird im Rahmen der vorliegenden Erfindung die kleinste Einheit in einem Muster (Struktur) verstanden. Eine solche Struktureinheit kann beispielsweise ein Karo, eine Raute, ein Rechteck, ein Quadrat oder eine Linie sein. Gegebenenfalls können sich solche Struktureinheiten auch abwechseln und/oder miteinander kombiniert werden. So sind Muster denkbar, die aus mehreren verschiedenen Struktureinheiten aufgebaut sind, beispielsweise aus mehreren Linien von unterschiedlicher Stärke (Breite) und/oder Tiefe, die sich beispielsweise mit Rauten und/oder Quadraten abwechseln. So können auch in einem Gitter verschiedene Struktureinheiten enthalten sein, beispielsweise Quadrate von unterschiedlicher Größe, die abwechselnd angeordnet sind.

Die Abstände zwischen den einzelnen Struktureinheiten einer strukturierten Vertiefung auf der ersten Seite (S1-1) der ersten dünneren thermoplastischen Schaumstoffplatte (T1) können beliebige Werte (Größen) annehmen, beispielsweise 30 mm. Vorzugsweise beträgt der Abstand zwischen den einzelnen Vertiefungen maximal 20 mm (Durchschnittswert über alle Vertiefungen). Insbesondere beträgt der Abstand 1,5 bis 20 mm. Die Breite einer Struktureinheit (Struktur), beispielsweise der Durchmesser eines Punktes bei einer punktförmigen Struktur oder die Breite einer Linie (bei einer linien- oder gitterförmigen Struktur) kann beliebig sein, vorzugsweise im Bereich von 1 bis 25 mm, mehr bevorzugt im Bereich von 5 bis 20 mm, insbesondere bevorzugt im Bereich von 10 bis 15 mm.

Ebenso können die Vertiefungen als solche (also die Tiefe einer Strukturierung), beliebige Werte (Größen) annehmen. So ist denkbar, dass in Teilbereichen der ersten Seite (S1-1) der ersten dünneren thermoplastischen Schaumstoffplatte (T1) die gleichen Struktureinheiten/Muster enthalten sind, die sich jedoch hinsichtlich ihrer Tiefe unterscheiden. Die Vertiefungen sind (als Durchschnittswert) in aller Regel nicht größer (tiefer) als 25 % der entsprechenden Plattendicke, wobei dieser Wert bei sehr dünnen ersten dünneren thermoplastischen Schaumstoffplatten (T1) auch etwas höher ausfallen kann. Die erste dünnere thermoplastische Schaumstoffplatte (T1) weist dann beispielsweise eine Dicke von weniger als 10 mm auf. Hat eine erste dünnere thermoplastische Schaumstoffplatte (T1) beispielsweise eine Dicke von 100 mm, so haben die Vertiefungen (im Durchschnitt) vorzugsweise eine Tiefe von maximal 20 mm. Bevorzugt weisen die strukturierten Vertiefungen im Durchschnitt eine Tiefe von nicht größer als 10 mm auf, besonders bevorzugt eine Tiefe von nicht größer als 5 mm (jeweils bezogen auf die Teile der ersten Seite (S1-1) der ersten dünneren thermoplastischen Schaumstoffplatten (T1), die keine Vertiefungen aufweisen). Die Mindesttiefe einer Strukturierung im Rahmen der vorliegenden Erfindung beträgt vorzugsweise 0,5 mm, bevorzugt 1 mm, besonders bevorzugt 2 mm (als Durchschnittswerte jeweils bezogen auf die Teile der ersten Seite (S1-1) der ersten dünneren thermoplastischen Schaumstoffplatte (T1), die keine Vertiefungen aufweisen).

Für die bevorzugt zusätzlich in die zweite Seite (S2-1) der ersten dünneren thermoplastischen Schaumstoffplatte (T1) eingebrachten Strukturierungen gelten die zuvor beschriebenen Ausführungen und Bevorzugungen für die in die erste Seite (S1-1) der ersten dünneren thermoplastischen Schaumstoffplatte (T1) eingebrachten Strukturierungen entsprechend.

In Schritt d) wird die Schäumhaut von der zweiten Seite (S2-1) der ersten dünneren thermoplastischen Schaumstoffplatte (T1) entfernt. Verfahren zur Entfernung der Schäumhaut von der zweiten Seite (S2-1) der ersten dünneren thermoplastischen Schaumstoffplatte (T1) sind dem Fachmann als solche bekannt.

In Schritt d) kann die Schäumhaut von der zweiten Seite (S2-1) der ersten dünneren thermoplastischen Schaumstoffplatte (T1) beispielsweise entfernt werden durch Hobeln, Fräsen, Sägen und/oder Glühdrahtschneiden. Bevorzugt wird sie entfernt durch Fräsen oder Hobeln.

Nach Schritt d) ist die zweite Seite (S2-1) der ersten dünneren thermoplastischen Schaumstoffplatte (T1) schäumhautfrei.

Der Vollständigkeit halber wird angemerkt, dass bei Verwendung eines Extrusionsschaumstoffs statt der Bezeichnung "schäumhautfrei" häufig der Begriff "extrusionshautfrei" verwendet wird.

Der Vollständigkeit halber sei außerdem angemerkt, dass sich Hobeln oder Fräsen zur Erzeugung der Strukturierung auf der ersten Seite (S1-1) der ersten dünneren thermoplastischen Schaumstoffplatte (T1) von dem Hobeln oder Fräsen zur Entfernung der Schäumhaut von der zweiten Seite (S2-1) der ersten dünneren thermoplastischen Schaumstoffplatte (T1) unterscheidet, insbesondere dahingehend, dass im Fall der Erzeugung von Strukturierungen auf der ersten Seite (S1-1) der ersten dünneren thermoplastischen Schaumstoffplatte (T1) das Hobeln oder Fräsen an ausgesuchten Stellen/Teilbereichen der ersten Seite (S1-1) der ersten dünneren thermoplastischen Schaumstoffplatte (T1) unter Erzeugung der gewünschten Struktureinheit/des gewünschten Musters gezielt durchgeführt wird. Dagegen wird beim Hobeln oder Fräsen zur Entfernung der Schäumhaut von der zweiten Seite (S2-1) der ersten dünneren thermoplastischen Schaumstoffplatte (T1) keine Struktur erzeugt. Vorzugsweise weist die erste dünnere thermoplastische Schaumstoffplatte (T1) nach Schritt d) eine völlig ebene zweite Seite (S2-1) auf, die (auf makroskopischer Ebene) keine Vertiefungen und Vorsprünge enthält.

Werden in einer bevorzugten Ausführungsform des erfindungsgemäßen Verfahrens in Schritt c) zusätzlich Strukturierungen in die zweite Seite (S2-1) der ersten dünneren thermoplastischen Schaumstoffplatte (T1) eingebracht, so werden in Schritt d) diese Strukturierungen von der zweiten Seite (S2-1) der ersten dünneren thermoplastischen Schaumstoffplatte (T1) entfernt.

Der Begriff "Entfernen der Schäumhaut von der zweiten Seite (S2-1)" umfasst im Rahmen der vorliegenden Erfindung somit sowohl das Entfernen der Schäumhaut als auch das Entfernen von in Schritt c) gegebenenfalls zusätzlich in die zweite Seite (S2-1) eingebrachten Strukturierungen.

In Schritt e) wird die Schäumhaut von der ersten Seite (S1-2) der zweiten dünneren thermoplastischen Schaumstoffplatte (T2) entfernt.

Für das Entfernen der Schäumhaut von der ersten Seite (S1-2) der zweiten dünneren thermoplastischen Schaumstoffplatte (T2) in Schritt e) gelten die Ausführungen und Bevorzugungen für das Entfernen der Schäumhaut von der zweiten Seite (S2-1) der ersten dünneren thermoplastischen Schaumstoffplatte (T1) in Schritt d) entsprechend.

Daher ist es bevorzugt, dass in Schritt e) die Schäumhaut von der ersten Seite (S1-2) der zweiten dünneren thermoplastischen Schaumstoffplatte (T2) entfernt wird durch Hobeln, Fräsen, Sägen und/oder Glühdrahtscheiden.

Erfindungsgemäß bevorzugt wird vor Schritt f) die Schäumhaut von der zweiten Seite (S2-2) der zweiten dünneren thermoplastischen Schaumstoffplatte (T2) nicht entfernt. Die zweite Seite (S2-2) der zweiten dünneren thermoplastischen Schaumstoffplatte (T2) weist daher in Schritt f) bevorzugt eine Schäumhaut auf.

In Schritt f) wird die zweite Seite (S2-1) der ersten dünneren thermoplastischen Schaumstoffplatte (T1) mit der ersten Seite (S1-2) der zweiten dünneren thermoplastischen Schaumstoffplatte (T2) verbunden unter Erhalt der zumindest zweilagigen einseitig strukturierten thermoplastischen Schaumstoffplatte.

Verfahren zum Verbinden der zweiten Seite (S2-1) der ersten dünneren thermoplastischen Schaumstoffplatte (T1) mit der ersten Seite (S1-2) der zweiten dünneren thermoplastischen Schaumstoffplatte (T2) sind dem Fachmann als solche bekannt.

Beispielsweise kann die zweite Seite (S2-1) der ersten dünneren thermoplastischen Schaumstoffplatte (T1) mit der ersten Seite (S1-2) der zweiten dünneren thermoplastischen Schaumstoffplatte (T2) verbunden werden durch Quellschweißen, Lösungsmittelschweißen, Verkleben und/oder Verschweißen. Vorzugsweise werden die zweite Seite (S2-1) der ersten dünneren thermoplastischen Schaumstoffplatte (T1) und die erste Seite (S1-2) der zweiten dünneren thermoplastischen Schaumstoffplatte (T2) verbunden durch Verkleben und/oder Verschweißen, insbesondere durch Verschweißen.

Bevorzugt wird also in Schritt f) die zweite Seite (S2-1) der ersten dünneren thermoplastischen Schaumstoffplatte (T1) mit der ersten Seite (S1-2) der zweiten dünneren thermoplastischen Schaumstoffplatte (T2) verbunden durch Verschweißen oder Verkleben.

Sofern im erfindungsgemäßen Verfahren in Schritt f) die zweite Seite (S2-1) der ersten dünneren thermoplastischen Schaumstoffplatte (T1) mit der ersten Seite (S1-2) der zweiten dünneren thermoplastischen Schaumstoffplatte (T2) verbunden wird durch Verkleben, erfolgt die Durchführung des Verklebevorgangs bzw. die Auswahl geeigneter Klebstoffe nach dem Fachmann bekannten Verfahren. Ein entsprechendes Klebeverfahren sowie geeignete Klebstoffe sind beispielsweise in der deutschen Patentanmeldung DE 10 2012 023180.6 offenbart.

Sofern im erfindungsgemäßen Verfahren das Verbinden der zweiten Seite (S2-1) der ersten dünneren thermoplastischen Schaumstoffplatte (T1) mit der ersten Seite (S1-2) der zweiten dünneren thermoplastischen Schaumstoffplatte (T2) durch Verschweißen erfolgt, ist die Durchführung des Verschweißens als solches dem Fachmann bekannt. Der Effekt des Verschweißens wird bei den zu verschweißenden Oberflächen erzielt, indem die jeweiligen Oberflächen einer Wärmequelle ausgesetzt werden. Die entsprechenden Wärmequellen oder Vorrichtungen sind dem Fachmann bekannt. Vorzugsweise wird das Verschweißen mit einer Vorrichtung, ausgewählt aus einem Heizschwert, einem Heizgitter oder einer Heizplatte durchgeführt, wobei die Vorrichtung gegebenenfalls mit Noppen oder Rillen versehen sein kann. Beispielsweise kann das Verschweißen kontinuierlich unter Verwendung eines Heizschwerts durchgeführt werden, ebenso kann ein Spiegelschweißverfahren unter Verwendung einer Heizplatte oder eines Heizgitters durchgeführt werden. Sofern die entsprechende Vorrichtung zum Verschweißen Noppen oder Rillen aufweist, können auf diese Weise auch strukturierte Vertiefungen auf die entsprechende Oberfläche der zu verbindenden zweiten Seite (S2-1) der ersten dünneren thermoplastischen Schaumstoffplatte (T1) und/oder der ersten Seite (S1-2) der zweiten dünneren thermoplastischen Schaumstoffplatte (T2) aufgebracht werden. Anstelle der Verwendung einer Vorrichtung wie eines Heizschwerts oder eines Heizgitters ist es auch möglich, das Verschweißen, also die Wärmezufuhr, unter Verwendung von elektromagnetischer Strahlung teilweise oder vollständig durchzuführen.

Bevorzugt wird in Schritt f) die zweite Seite (S2-1) der ersten dünneren thermoplastischen Schaumstoffplatte (T1) mit der ersten Seite (S1-2) der zweiten dünneren thermoplastischen Schaumstoffplatte (T2) verbunden durch verschweißen, wobei sich eine Schweißnaht ausbildet, die eine Dicke im Bereich von 30 bis 200 µm, vorzugsweise im Bereich von 50 bis 150 µm, mehr bevorzugt im Bereich von 80 bis 100 µm aufweist.

Das Verschweißen wird erfindungsgemäß bevorzugt bei Temperaturen im Bereich von 150 °C bis 400 °C durchgeführt, wobei vorzugsweise auf Temperaturen oberhalb der Glasübergangstemperatur und/oder der Schmelztemperatur des in den dünneren thermoplastischen Schaumstoffplatten üblicherweise enthaltenen Polymers, erhitzt wird. Vorzugsweise wird das Verschweißen bei Temperaturen im Bereich von 50 bis 300 °C oberhalb der Glasübergangstemperatur bei amorphen thermoplastischen Schaumstoffen oder im Bereich von 50 bis 100 °C oberhalb der Schmelztemperatur bei teilkristallinen thermoplastischen Schaumstoffen durchgeführt.

Erfindungsgemäß bevorzugt wird in Schritt f) die zweite Seite (S2-1) der ersten dünneren thermoplastischen Schaumstoffplatte (T1) mit der ersten Seite (S1-2) der zweiten dünneren thermoplastischen Schaumstoffplatte (T2) verbunden durch Verschweißen, wobei das Verschweißen die folgenden Schritte umfasst.
f1) die zweite Seite (S2-1) der ersten dünneren thermoplastischen Schaumstoffplatte (T1) wird in einem Abstand (a) parallel zu der ersten Seite (S1-2) der zweiten dünneren thermoplastischen Schaumstoffplatte (T2) ausgerichtet, so dass sie einen Zwischenraum ausbilden,
f2) in den Zwischenraum werden mindestens zwei Heizelemente auf parallel zueinander versetzten Ebenen und parallel zu der zweiten Seite (S2-1) der ersten dünneren thermoplastischen Schaumstoffplatte (T1) und der ersten Seite (S1-2) der zweiten dünneren thermoplastischen Schaumstoffplatte (T2) eingeführt, wobei sich die zweite Seite (S2-1), die erste Seite (S1-2) und die Heizelemente nicht gegenseitig berühren,
f3) die Heizelemente werden so weit zwischen die erste dünnere thermoplastische Schaumstoffplatte (T1) und die zweite dünnere thermoplastische Schaumstoffplatte (T2) eingeführt, bis zwischen der ersten dünneren thermoplastischen Schaumstoffplatte (T1) und der zweiten dünneren thermoplastischen Schaumstoffplatte (T2), bezogen auf jede Stelle der ersten Seite (S1-2) und der zweiten Seite (S2-1) zumindest zeitweise sich mindestens eines der Heizelemente befunden hat,
f4) die Heizelemente werden vollständig aus dem Zwischenraum wieder entfernt,
f5) die erste dünnere thermoplastische Schaumstoffplatte (T1) wird gegen die erste Seite (S1-2) der zweiten dünneren thermoplastischen Schaumstoffplatte (T2) gedrückt, und/oder die zweite dünnere thermoplastische Schaumstoffplatte (T2) wird gegen die zweite Seite (S2-1) der ersten dünneren thermoplastischen Schaumstoffplatte (T1) gedrückt, unter Erhalt der zumindest zweilagigen einseitig strukturierten thermoplastischen Schaumstoffplatte.

Der Abstand (a) in Schritt f1) wird so gewählt, dass mindestens zwei Heizelemente zwischen den Ausgangsplatten in parallel zueinander versetzten Ebenen so bewegt werden können, dass sie die Oberflächen der entsprechenden Ausgangsplatten nicht berühren. Dabei weisen die Heizelemente auch einen gewissen Abstand zueinander auf, um ein reibungsloses Ein- und Ausführen der Heizelemente zu gewährleisten. Der Abstand (a) ist umso größer, je höher die Anzahl an Heizelementen in einer bevorzugten Ausführungsform des erfindungsgemäßen Verfahrens ist, die auf parallel zueinander versetzten Ebenen in den Zwischenraum ein- und aus diesem ausgeführt werden.

Vorzugsweise liegt in Schritt f1) der Abstand (a) im Bereich von 10 bis 150 mm, insbesondere im Bereich von 15 bis 80 mm.

Als Heizelement in Schritt f2) in der bevorzugten Ausführungsform des erfindungsgemäßen Verfahrens, können alle dem Fachmann bekannten Heizelemente eingesetzt werden, die beweglich sind und ein kontaktloses Verschweißen ermöglichen. Vorzugsweise werden zwei Heizelemente verwendet. Weiterhin ist es bevorzugt, dass die Heizelemente Heizplatten sind. Sofern mehr als zwei Heizelemente verwendet werden, ist es bevorzugt, eine gerade Anzahl von Heizelementen auf parallel zueinander versetzten Ebenen einzusetzen. Bevorzugte Heizelemente sind Heizplatten mit einer Oberflächentemperatur im Bereich von 200 bis 700 °C, insbesondere im Bereich von 200 bis 450 °C.

Sie können beispielsweise in der Außenposition (Ruheposition) kontaktlos vorgeheizt werden durch IR-Strahler oder elektrisch mittel Induktion oder direkt beheizt werden durch elektrische Widerstandsheizungen oder mittels Wärmeträgerölen.

In Schritt f5) können prinzipiell beide Ausgangsplatten gegeneinander gedrückt werden, also solange aufeinander zubewegt werden, bis der Abstand (a) gleich Null ist. Vorzugsweise wird allerdings nur eine Ausgangsplatte gegen die jeweils andere Ausgangsplatte gedrückt.

Es ist außerdem bevorzugt, dass im Rahmen von Schritt f5) ein Verpressen der zu verbindenden Ausgangsplatten durchgeführt wird. Das Verpressen erfolgt im Allgemeinen im Sekunden- bis Minutenbereich und/oder bei einem Pressdruck im Bereich von 0,01 bis 0,5 bar, vorzugsweise im Bereich von 0,02 bis 0,2 bar.

Es ist außerdem bevorzugt, dass in Schritt f2) zwei Heizelemente aus jeweils zueinander entgegengesetzten Richtungen in den Zwischenraum eingeführt und/oder zwei Heizelemente in Schritt f4) in jeweils zueinander entgegengesetzten Richtungen aus dem Zwischenraum wieder entfernt werden. Insbesondere bevorzugt werden die Heizplatten jeweils in entgegengesetzter Richtung zueinander in den Zwischenraum eingeführt und diese Bewegungsrichtung wird auch beim Ausführen beibehalten.

Das erfindungsgemäße Verfahren kann sowohl in horizontaler als auch in vertikaler Ausrichtung der Heizelemente durchgeführt werden. Bevorzugt ist jedoch die vertikale Ausführungsform (jeweils bezogen auf die Räumlichkeit).

Durch das bevorzugte Verschweißen bildet sich zwischen den zu verschweißenden Oberflächen eine Schweißnaht aus. Anstelle des Begriffs "Schweißnaht" können auch die Begriffe "Schweißhaut" oder "Schweißzone" verwendet werden. An Stellen, wo sich eine Schweißnaht ausbildet, kann die Schweißnaht beliebige Dicken annehmen.

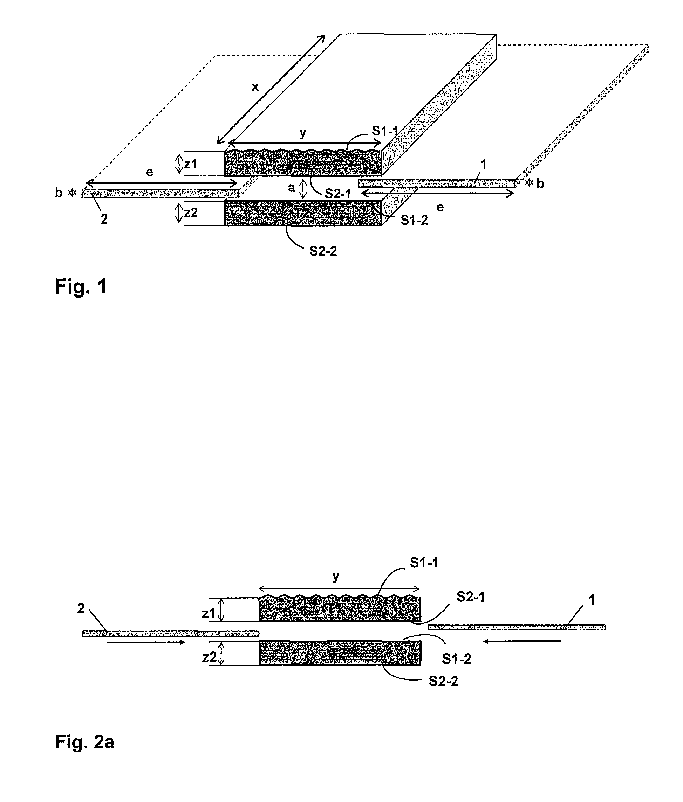

In den Figuren 1 bis 6 sind bevorzugte Ausführungsformen der vorliegenden Erfindung gezeigt.

Figur 1 zeigt die parallele Ausrichtung der zweiten Seite S2-1 der ersten dünneren thermoplastischen Schaumstoffplatte T1 und der ersten Seite S1-2 der zweiten dünneren thermoplastischen Schaumstoffplatte T2 gemäß Schritt f1). Die dünneren thermoplastischen Schaumstoffplatten werden im Rahmen der vorliegenden Erfindung auch als Ausgangsplatten bezeichnet. "x" stellt die Länge einer Ausgangsplatte (beispielsweise im Bereich von 500 bis 2800 mm) dar. "y" stellt die Breite der Ausgangsplatte (beispielsweise 500 bis 1250 mm) dar. "z1" steht für die Dicke der ersten dünneren thermoplastischen Schaumstoffplatte T1 (beispielsweise im Bereich von 20 bis 200 mm) und "z2" steht für die Dicke der zweiten dünneren thermoplastischen Schaumstoffplatte T2 (beispielsweise im Bereich von 20 bis 200 mm). Es versteht sich von selbst, dass die Länge, die Breite und die Dicke der ersten dünneren thermoplastischen Schaumstoffplatte T1 und der zweiten dünneren thermoplastischen Schaumstoffplatte T2 unterschiedlich sein können. Die zweite

Seite S2-1 der ersten dünneren thermoplastischen Schaumstoffplatte T1 und die erste Seite S1-2 der zweiten dünneren thermoplastischen Schaumstoffplatte T2 und damit auch die erste dünnere thermoplastische Schaumstoffplatte T1 und die zweite dünnere thermoplastische Schaumstoffplatte T2 sind parallel im Abstand a zueinander ausgerichtet, der vorzugsweise im Bereich von 10 bis 150 mm liegt. "1" und "2" bezeichnet die beiden Heizelemente, die in einer bevorzugten Ausführungsform eingesetzt werden. "b" und "e" bezeichnen die Dicke sowie die Breite der bevorzugt eingesetzten beiden Heizelemente.

In Figur 2a ist eine Außenposition (Ruheposition oder Parkposition) für das erste Heizelement 1 und das zweite Heizelement 2 bildhaft dargestellt. Als Außenposition werden also die Positionierungen der Heizelemente 1 und 2 aufgefasst, die sich außerhalb des in Schritt f1) definierten Zwischenraums zwischen den beiden Ausgangsplatten befinden. Wie aus Figur 2a ersichtlich, werden die beiden Heizelemente 1 und 2, vorzugsweise die Heizplatten 1 und 2, in Pfeilrichtung in besagten Zwischenraum zwischen den Ausgangsplatten eingeführt.

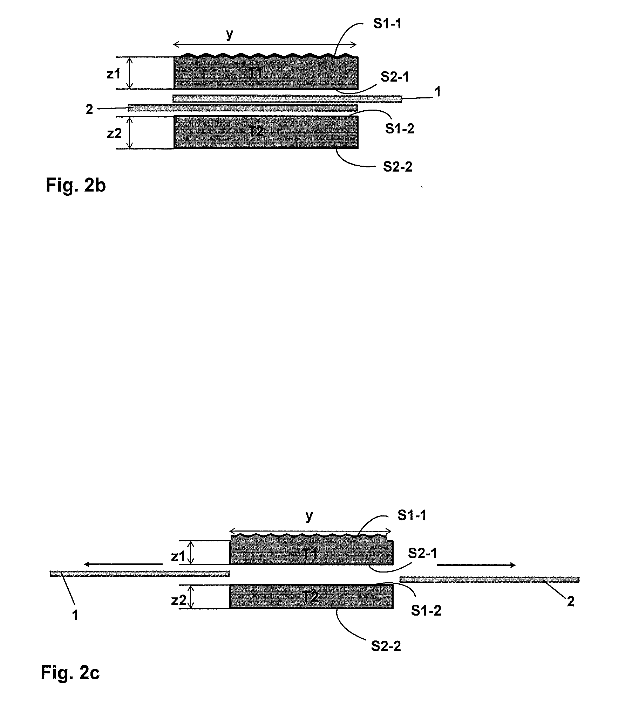

Schritt f3) ist in Figur 2b bildlich dargestellt. Die Heizelemente 1 und 2 werden so weit zwischen die erste dünnere thermoplastische Schaumstoffplatte T1 und die zweite dünnere thermoplastische Schaumstoffplatte T2 eingeführt, bis zwischen der ersten dünneren thermoplastischen Schaumstoffplatte T1 und der zweiten dünneren thermoplastischen Schaumstoffplatte T2, bezogen auf jede Stelle der ersten Seite S1-2 der zweiten dünneren thermoplastischen Schaumstoffplatte T2 und der zweiten Seite S2-1 der ersten dünneren thermoplastischen Schaumstoffplatte T1, zumindest zeitweise sich eines der Heizelemente 1 oder 2 befunden hat. Mit anderen Worten ausgedrückt, befindet sich an jeder Stelle der ersten Seite S1-2 der zweiten dünneren thermoplastischen Schaumstoffplatte T2 das zweite Heizelement 2 und an jeder Stelle der zweiten Seite S2-1 der ersten dünneren thermoplastischen Schaumstoffplatte T1 das erste Heizelement 1.

Figur 2c zeigt Schritt f4), in dem die Heizelemente 1 und 2 vollständig aus dem Zwischenraum wieder entfernt werden, wobei das Entfernen vorzugsweise ohne Richtungsumkehr erfolgt.

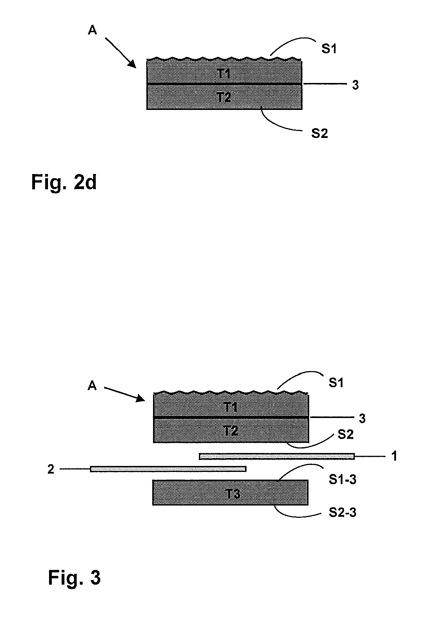

Anschließend werden die erste dünnere thermoplastische Schaumstoffplatte T1 und die zweite dünnere thermoplastische Schaumstoffplatte T2 gegeneinander gepresst unter Erhalt einer zweilagigen einseitig strukturierten thermoplastischen Schaumstoffplatte A (Figur 2d). Zwischen der ersten dünneren thermoplastischen Schaumstoffplatte T1 und der zweiten dünneren thermoplastischen Schaumstoffplatte T2 bildet sich eine Schweißnaht 3. Die zweilagige einseitig strukturierte thermoplastische Schaumstoffplatte A weist eine erste Seite S1 und eine zweite Seite S2 auf. Dem Fachmann ist klar, dass die erste Seite S1 der zweilagigen einseitig strukturierten thermoplastischen Schaumstoffplatte A der ersten Seite S1-1 der ersten dünneren thermoplastischen Schaumstoffplatte T1 entspricht, während die zweite Seite S2 der zweilagigen einseitig strukturierten thermoplastischen Schaumstoffplatte A der zweiten Seite S2-2 der zweiten dünneren thermoplastischen Schaumstoffplatte T2 entspricht. Die erste Seite S1 der zweilagigen einseitig strukturierten thermoplastischen Schaumstoffplatte A entspricht wie vorstehend beschrieben der ersten Seite S1-1 der ersten dünneren thermoplastischen Schaumstoffplatte T1. Daher können die beiden Begriffe im Rahmen der vorliegenden Erfindung synonym gebraucht werden und besitzen dann die gleiche Bedeutung. Gleiches gilt für die zweite Seite S2 der zweilagigen einseitig strukturierten thermoplastischen Schaumstoffplatte A. Die Bezeichnungen "zweite Seite S2 der zweilagigen einseitig strukturierten thermoplastischen Schaumstoffplatte A" und "zweite Seite S2-2 der zweiten dünneren thermoplastischen Schaumstoffplatte T2" können im Rahmen der vorliegenden Erfindung synonym gebraucht werden und besitzen dann die gleiche Bedeutung.

Es versteht sich von selbst, dass die Strukturierung, die die erste Seite (S1) der zumindest zweilagigen einseitig strukturierten thermoplastischen Schaumstoffplatte aufweist, den Strukturierungen der in Schritt c) in die erste Seite (S1-1) der ersten dünneren thermoplastischen Schaumstoffplatte (T1) eingebrachten Strukturierungen entspricht. Die erste Seite (S1) der zumindest zweilagigen einseitig strukturierten thermoplastischen Schaumstoffplatte entspricht also der ersten Seite (S1-1) der ersten dünneren thermoplastischen Schaumstoffplatte (T1).

In Schritt f) wird die zumindest zweilagige einseitig strukturierte thermoplastische Schaumstoffplatte erhalten. Die zumindest zweilagige einseitig strukturierte thermoplastische Schaumstoffplatte weist eine erste Seite (S1) und eine zweite Seite (S2) auf. Die erste Seite (S1) der zumindest zweilagigen einseitig strukturierten thermoplastischen Schaumstoffplatte weist Strukturierungen auf. Die zweite Seite (S2) weist vorzugsweise eine Schäumhaut auf.

Die zweite Seite (S2) der zumindest zweilagigen einseitig strukturierten thermoplastischen Schaumstoffplatte entspricht der zweiten Seite (S2-2) der zweiten dünneren thermoplastischen Schaumstoffplatte (T2).

Es ist erfindungsgemäß außerdem bevorzugt, dass die erste dünnere thermoplastische Schaumstoffplatte (T1) die gleichen Dimensionen in Länge und Breite aufweist wie die zweite dünnere thermoplastische Schaumstoffplatte (T2).

Es ist erfindungsgemäß außerdem bevorzugt, dass die erste dünnere thermoplastische Schaumstoffplatte (T1) der gleiche Partikelschaumstoff oder Extrusionsschaumstoff ist wie die zweite dünnere thermoplastische Schaumstoffplatte (T2).

Erfindungsgemäß werden die Schritte a) bis e) vor Schritt f) durchgeführt, wobei die Schritte c), d) und e) in beliebiger Reihenfolge durchgeführt werden. Ebenso können die Schritte a) und b) in beliebiger Reihenfolge oder gleichzeitig durchgeführt werden. Die Schritte c), d) und e) können in beliebiger Reihenfolge nacheinander oder zumindest zwei der Schritte gleichzeitig durchgeführt werden.

In einer bevorzugten Ausführungsform des erfindungsgemäßen Verfahrens werden zusätzlich die folgenden Schritte g) bis j) durchgeführt:
g) Bereitstellung einer dritten dünneren thermoplastischen Schaumstoffplatte (T3), die eine erste Seite (S1-3) und eine zweite Seite (S2-3) aufweist, wobei die erste Seite (S1-3) und die zweite Seite (S2-3) jeweils eine Schäumhaut aufweisen,
h) Entfernen der Schäumhaut von der ersten Seite (S1-3) der dritten dünneren thermoplastischen Schaumstoffplatte (T3),
i) Entfernen der Schäumhaut von der zweiten Seite (S2-2) der zweiten dünneren thermoplastischen Schaumstoffplatte (T2),
j) Verbinden der ersten Seite (S1-3) der dritten dünneren thermoplastischen Schaumstoffplatte (T3) mit der zweiten Seite (S2-2) der zweiten dünneren thermoplastischen Schaumstoffplatte (T2),
wobei die Schritte f) und j) in beliebiger Reihenfolge oder gleichzeitig durchgeführt werden.

Für die Bereitstellung der dritten dünneren thermoplastischen Schaumstoffplatte (T3), die eine erste Seite (S1-3) und eine zweite Seite (S2-3) aufweist, wobei die erste Seite (S1-3) und die zweite Seite (S2-3) jeweils eine Schäumhaut aufweisen, gelten die zuvor beschriebenen Ausführungen und Bevorzugungen für das Bereitstellen der ersten dünneren thermoplastischen Schaumstoffplatte (T1) in Schritt a) entsprechend.

Daher ist es erfindungsgemäß bevorzugt, dass die in Schritt g) bereitgestellte dritte dünnere thermoplastische Schaumstoffplatte (T3) ein Partikelschaumstoff oder ein Extrusionsschaumstoff ist, auf Basis eines Polymers, ausgewählt aus der Gruppe bestehend aus Polystyrol, Polystyrolcopolymeren, Polyethersulfon, Polysulfon, Polyethylenterephthalat, Polyurethan, Polyolefinen, Polyolefincopolymeren und Acrylpolymeren, vorzugsweise ein Extrusionsschaumstoff auf Basis eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Extrusionsschaumstoff auf Basis eines Polymers, ausgewählt aus der Gruppe bestehend aus Polystyrol, Polystyrolcopolymeren und Polyethylenterephthalat.

Ebenso ist es bevorzugt, dass die in Schritt g) bereitgestellte dritte dünnere thermoplastische Schaumstoffplatte (T3), eine Länge (x-Richtung) im Bereich von 500 bis 2800 mm, vorzugsweise im Bereich von 1000 bis 1500 mm, eine Breite (y-Richtung) im Bereich von 500 bis 1250 mm, vorzugsweise im Bereich von 500 bis 900 mm und eine Dicke (z-Richtung) im Bereich von 20 bis 200 mm, vorzugsweise im Bereich von 50 bis 100 mm, aufweist.

Für die erste Seite (S1-3) der dritten dünneren thermoplastischen Schaumstoffplatte (T3) und die zweite Seite (S2-3) der dritten dünneren thermoplastischen Schaumstoffplatte (T3) gelten die Ausführungen und Bevorzugungen wie vorstehend für die ersten Seite (S1-1) der ersten dünneren thermoplastischen Schaumstoffplatte (T1) und die zweite Seite (S2-1) der ersten dünneren thermoplastischen Schaumstoffplatte (T1) beschrieben, entsprechend.

Daher ist es erfindungsgemäß bevorzugt, dass die erste Seite (S1-3) der dritten dünneren thermoplastischen Schaumstoffplatte (T3) der zweiten Seite (S2-3) der dritten dünneren thermoplastischen Schaumstoffplatte (T3) gegenüber liegt.

Ebenso ist es erfindungsgemäß bevorzugt, dass die erste Seite (S1-3) und/oder die zweite Seite (S2-3) der dritten dünneren thermoplastischen Schaumstoffplatte (T3) die flächenmäßig größte Seite der dritten dünneren thermoplastischen Schaumstoffplatte (T3) ist.

In Schritt h) wird die Schäumhaut von der ersten Seite (S1-3) der dritten dünneren thermoplastischen Schaumstoffplatte (T3) entfernt.

Für Schritt h) gelten die vorstehend für Schritt d), das Entfernen der Schäumhaut von der zweiten Seite (S2-1) der ersten dünneren thermoplastischen Schaumstoffplatte (T1) beschriebenen Ausführungen und Bevorzugungen entsprechend.

Daher ist es bevorzugt, dass in Schritt h) die Schäumhaut von der ersten Seite (S1-3) der dritten dünneren thermoplastischen Schaumstoffplatte (T3) entfernt wird, durch Hobeln, Fräsen, Sägen und/oder Glühdrahtschneiden.

In Schritt i) wird die Schäumhaut von der zweiten Seite (S2-2) der zweiten dünneren thermoplastischen Schaumstoffplatte (T2) entfernt.

Wie vorstehend bereits beschrieben, kann es sich bei der zweiten Seite (S2-2) der zweiten dünneren thermoplastischen Schaumstoffplatte (T2) tatsächlich um die zweite Seite (S2-2) der zweiten dünneren thermoplastischen Schaumstoffplatte (T2) handeln. Ebenso ist es möglich, dass die zumindest zweilagig einseitig strukturierte thermoplastische Schaumstoffplatte in Schritt f) erhalten worden ist und dann in Schritt i) die Schäumhaut von der zweiten Seite (S2) der zumindest zweilagigen einseitig strukturierten thermoplastischen Schaumstoffplatte entfernt wird. Im Rahmen der vorliegenden Erfindung können die Bezeichnungen "zweite Seite (S2-2) der zweiten dünneren thermoplastischen Schaumstoffplatte (T2)" und "zweite Seite (S2) der zumindest zweilagigen einseitig strukturierten thermoplastischen Schaumstoffplatte" synonym gebraucht werden und besitzen dann die gleiche Bedeutung.

Für Schritt i) gelten die gleichen Ausführungen und Bevorzugungen wie für das Entfernen der Schäumhaut von der zweiten Seite (S2-1) der ersten dünneren thermoplastischen Schaumstoffplatte (T1) in Schritt d).

Erfindungsgemäß ist es daher bevorzugt, dass in Schritt i) die Schäumhaut von der zweiten Seite (S2-2) der zweiten dünneren thermoplastischen Schaumstoffplatte (T2) entfernt wird durch Hobeln, Fräsen Sägen und/oder Glühdrahtschneiden.

In Schritt j) wird die erste Seite (S1-3) der dritten dünneren thermoplastischen Schaumstoffplatte (T3) mit der zweiten Seite (S2-2) der zweiten dünneren thermoplastischen Schaumstoffplatte (T2) verbunden.

Für das Verbinden der ersten Seite (S1-3) der dritten dünneren thermoplastischen Schaumstoffplatte (T3) mit der zweiten Seite (S2-2) der zweiten dünneren thermoplastischen Schaumstoffplatte (T2) gelten die gleichen Ausführungen und Bevorzugungen wie das Verbinden der zweiten Seite (S2-1) der ersten dünneren thermoplastischen Schaumstoffplatte (T1) mit der ersten Seite (S1-2) der zweiten dünneren thermoplastischen Schaumstoffplatte (T2) in Schritt f).

Es ist daher bevorzugt, dass in Schritt j) die zweite Seite (S2-2) der zweiten dünneren thermoplastischen Schaumstoffplatte (T2) mit der ersten Seite (S1-3) der dritten dünneren thermoplastischen Schaumstoffplatte (T3) verbunden wird durch Verschweißen oder Verkleben.

Es ist weiterhin bevorzugt, dass in Schritt j) die zweite Seite (S2-2) der zweiten dünneren thermoplastischen Schaumstoffplatte (T2) mit der ersten Seite (S1-3) der dritten dünneren thermoplastischen Schaumstoffplatte (T3) verbunden wird durch Verschweißen, wobei sich eine Schweißnaht ausbildet, die eine Dicke im Bereich von 30 bis 200 µm, bevorzugt im Bereich von 50 bis 150 µm, mehr bevorzugt im Bereich von 80 bis 100 µm aufweist.

Es ist insbesondere bevorzugt, dass in Schritt j) die zweite Seite (S2-2) der zweiten dünneren thermoplastischen Schaumstoffplatte (T2) mit der ersten Seite (S1-3) der dritten dünneren thermoplastischen Schaumstoffplatte (T3) verbunden wird durch Verschweißen, wobei das Verschweißen die folgenden Schritte umfasst:
j1) Die zweite Seite (S2-2) der zweiten dünneren thermoplastischen Schaumstoffplatte (T2) wird in einem Abstand (a) parallel zu der ersten Seite (S1-3) der dritten dünneren thermoplastischen Schaumstoffplatte (T3) ausgerichtet, so dass sie einen Zwischenraum ausbilden,
j2) in den Zwischenraum werden mindestens zwei Heizelemente auf parallel zueinander versetzten Ebenen und parallel zu der zweiten Seite (S2-2) der zweiten dünneren thermoplastischen Schaumstoffplatte (T2) und der ersten Seite (S1-3) der dritten dünneren thermoplastischen Schaumstoffplatte (T3) eingeführt, wobei sich die zweite Seite (S2-2), die erste Seite (S1-3) und die Heizelemente nicht gegenseitig berühren,
j3) die Heizelemente werden so weit zwischen die zweite dünnere thermoplastische Schaumstoffplatte (T2) und die dritte dünnere thermoplastische Schaumstoffplatte (T3) eingeführt, bis zwischen der zweiten dünneren thermoplastischen Schaumstoffplatte (T2) und der dritten dünneren thermoplastischen Schaumstoffplatte (T3), bezogen auf jede Stelle der ersten Seite (S1-3) und der zweiten Seite (S2-2) zumindest zeitweise sich mindestens eines der Heizelemente befunden hat,
j4) die Heizelemente werden vollständig aus dem Zwischenraum wieder entfernt,
j5) die zweite dünnere thermoplastische Schaumstoffplatte (T2) wird gegen die erste Seite (S1-3) der dritten dünneren thermoplastischen Schaumstoffplatte (T3) gedrückt, und/oder die dritte dünnere thermoplastische Schaumstoffplatte (T3) wird gegen die zweite Seite (S2-2) der zweiten dünneren thermoplastischen Schaumstoffplatte (T2) gedrückt.

Für diese besonders bevorzugte Ausführungsform von Schritt j) gelten die zuvor beschriebenen Ausführungen und Bevorzugungen für die besonders bevorzugte Ausführungsform von Schritt f) entsprechend.

Es versteht sich von selbst, dass das in den Figuren 2a bis 2d dargestellte Verfahren analog für die Verschweißung der zweiten dünneren thermoplastischen Schaumstoffplatte (T2) mit der dritten dünneren thermoplastischen Schaumstoffplatte (T3) gilt.

Darüber hinaus ist es bevorzugt, dass die zweite dünnere thermoplastische Schaumstoffplatte (T2) die gleichen Dimensionen in Länge und Breite aufweist, wie die dritte dünnere thermoplastische Schaumstoffplatte (T3). Ebenso ist es bevorzugt, dass die zweite dünnere thermoplastische Schaumstoffplatte (T2) der gleiche Partikelschaumstoff oder Extrusionsschaumstoff ist wie die dritte dünnere thermoplastische Schaumstoffplatte (T3).

Die Schritte g) bis i) werden vor Schritt j) durchgeführt. Die Reihenfolge der Schritte h) und i) ist egal. Sie können gleichzeitig oder nacheinander durchgeführt werden. Die Schritte a), b) und g) können in beliebiger Reihenfolge durchgeführt werden, zumindest zwei der Schritte können auch gleichzeitig durchgeführt werden. Ebenso können die Schritte c), d), e), h) und i) in beliebiger Reihenfolge durchgeführt werden, zumindest zwei von ihnen können gleichzeitig durchgeführt werden. Die Schritte f) und j) können ebenfalls in beliebiger Reihenfolge oder gleichzeitig durchgeführt werden.

Bevorzugt werden die Schritte f) und j) gleichzeitig durchgeführt.

Figur 3 zeigt eine Herstellungsmöglichkeit einer dreilagigen einseitig strukturierten thermoplastischen Schaumstoffplatte. Dabei wird an eine zweilagige einseitig strukturierte thermoplastische Schaumstoffplatte A nach dem in den Figuren 2a bis 2d beschriebenen Verfahren eine dritte dünnere thermoplastische Schaumstoffplatte (T3) angeschweißt. Dabei werden die zweite Seite S2 der zweilagigen einseitig strukturierten thermoplastischen Schaumstoffplatte A und die erste Seite S1-3 der dritten dünneren thermoplastischen Schaumstoffplatte (T3) erwärmt und anschließend verpresst, sodass sie miteinander verschweißen.

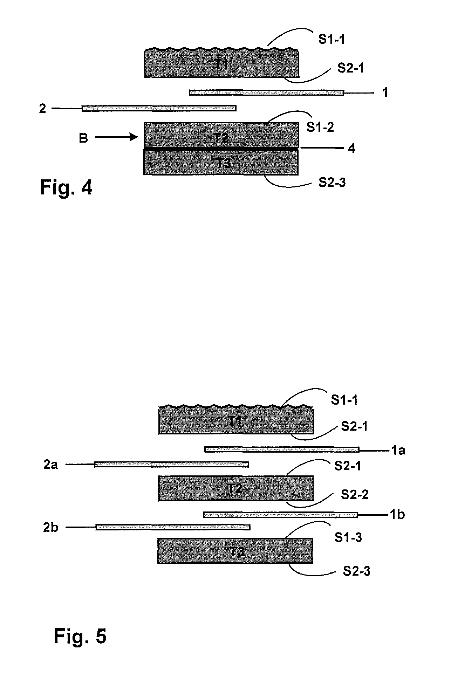

Figur 4 zeigt eine weitere Ausführungsform zur Herstellung einer dreilagigen einseitig strukturierten thermoplastischen Schaumstoffplatte. In dieser Ausführungsform wird zunächst die zweite dünnere thermoplastische Schaumstoffplatte T2 über ihre zweite Seite S2-2 mit der ersten Seite S1-3 einer dritten dünneren thermoplastischen Schaumstoffplatte T3 verbunden. Erfolgt das Verbinden beispielsweise durch Verschweißen, so bildet sich eine Schweißnaht 4. Diese zweilagige unstrukturierte thermoplastische Schaumstoffplatte B wird auch als "zweilagige Schaumstoffplatte B" bezeichnet. Die zweilagige Schaumstoffplatte B weist die erste Seite S1-2 der zweiten dünneren thermoplastischen Schaumstoffplatte T2 und die zweite Seite S2-3 der dritten dünneren thermoplastischen Schaumstoffplatte T3 auf. Anschließend werden die zweite Seite S2-1 der ersten dünneren thermoplastischen Schaumstoffplatte T1 und die erste Seite S1-2 der zweiten dünneren thermoplastischen Schaumstoffplatte T2, die der ersten Seite S1-2 der zweilagigen Schaumstoffplatte B entspricht, wie in den Figuren 2a bis 2d beschrieben, mittels Verschweißen miteinander verbunden.

Figur 5 zeigt eine dritte Ausführungsform zur Herstellung einer dreilagigen einseitig strukturierten thermoplastischen Schaumstoffplatte. Dabei werden die zweite Seite S2-1 der ersten dünneren thermoplastischen Schaumstoffplatte T1 und die erste Seite S1-2 der zweiten dünneren thermoplastischen Schaumstoffplatte T2 gleichzeitig zu der zweiten Seite S2-2 der zweiten dünneren thermoplastischen Schaumstoffplatte T2 und der ersten Seite S1-3 der dritten dünneren thermoplastischen Schaumstoffplatte T3 verschweißt nach dem in den Figuren 2a bis 2d beschriebenen Verfahren. Dabei werden zwei erste Heizelemente 1a und 1 b sowie zwei zweite Heizelemente 2a und 2b eingesetzt.

Figur 6 zeigt eine erfindungsgemäß hergestellte dreilagige einseitig strukturierte thermoplastische Schaumstoffplatte A*. Diese enthält die erste dünnere thermoplastische Schaumstoffplatte T1, die zweite dünnere thermoplastische Schaumstoffplatte T2 und die dritte dünnere thermoplastische Schaumstoffplatte T3. Die erste dünnere thermoplastische Schaumstoffplatte T1 ist über ihre zweite Seite S2-1 mit der ersten Seite S1-2 der zweiten dünneren thermoplastischen Schaumstoffplatte T2 verbunden worden, wobei sich eine Schweißnaht 3 ausgebildet hat. Ebenso wurde die zweite Seite S2-2 der zweiten dünneren thermoplastischen Schaumstoffplatte T2 mit der ersten Seite S1-3 der dritten dünneren thermoplastischen Schaumstoffplatte T3 verbunden, wobei sich eine Schweißnaht 4 ausgebildet hat.

Gegenstand der vorliegenden Erfindung ist außerdem eine zumindest zweilagige einseitig strukturierte thermoplastische Schaumstoffplatte erhältlich nach dem erfindungsgemäßen Verfahren.

Nachfolgend wird die vorliegende Erfindung anhand von Beispielen näher erläutert, ohne sie darauf zu beschränken.

### Beispiele

Es wurden folgende dünnere thermoplastische Schaumstoffplatten eingesetzt:

Platte aus Polystyrol-Extrusionsschaum mit einer Dichte von 32 kg/m³, die beidseitig eine Schäumhaut aufweist und eine Länge von 1300 mm, eine Breite von 660 mm und eine Dicke von 80 mm aufweist.

Platte aus Polystyrol-Extrusionsschaum mit einer Dichte von 32 kg/m³, die eine beidseitig geprägte Oberfläche aufweist und eine Länge von 1300 mm, eine Breite von 660 mm und eine Dicke von 80 mm aufweist.

### Beispiel 1

Die Platte aus Polystyrolschaum, die beidseitig eine Schäumhaut aufweist, wurde einseitig auf eine Dicke von 73 mm gefräst, so dass die Schäumhaut entfernt wurde.

Die Platte aus Polystorylschaum, die eine beidseitig strukturierte Oberfläche aufweist, wurde einseitig auf eine Dicke von 73 mm gefräst, so dass auf einer Seite die strukturierte Oberfläche entfernt wurde.

Die beiden gefrästen Oberflächen wurden parallel zueinander ausgerichtet und zwei Heizelemente mit einer Länge von 1320 mm und einer Breite von 680 mm mit einer Temperatur von 380 °C in den Zwischenraum zwischen die zu verschweißenden Platten bewegt. Die Heizelemente bleiben mittig zwischen den zu verschweißenden Platten für 2,6 sec. Stehen. Anschließend werden sie aus dem Zwischenraum ausgeführt bei Erhalt der Richtung. Anschließenden werden die dünneren thermoplastischen Schaumstoffplatten gegeneinander gepresst (entspricht den Schritten f1 bis f5). Die dabei erhaltene verschweißte Platte hat eine Dicke von 140 mm. Die 1300 mm lange Schaumstoffplatte schüsselt sich an den Enden um einen Betrag von ca. 1 mm.

### Vergleichsbeispiel 2

Eine 120 mm dicke Platte aus Polystyrolschaumstoff, der eine Dichte von 32 kg/m³ aufwies, wurde einseitig geprägt.

Die Geschwindigkeit des Prägevorgangs betrug 7 m/min, die Prägewalze wurde auf 300 °C erwärmt. Die erste Seite der Platte wurde nicht erwärmt. Beim Prägen wurde ein Gegendruck durch eine kalte glatte Walze aufgebracht.

Die Schaumstoffplatte hatte eine Länge von 285 m und verzog sich um 10 bis 12 mm.

## Patentansprüche

1. Verfahren zur Herstellung einer zumindest zweilagigen einseitig strukturierten thermoplastischen Schaumstoffplatte, umfassend die Schritte a) bis f):
a) Bereitstellen einer ersten dünneren thermoplastischen Schaumstoffplatte (T1), die eine erste Seite (S1-1) und eine zweite Seite (S2-1) aufweist, wobei die erste Seite (S1-1) und die zweite Seite (S2-1) jeweils eine Schäumhaut aufweisen,
b) Bereitstellen einer zweiten dünneren thermoplastischen Schaumstoffplatte (T2), die eine erste Seite (S1-2) und eine zweite Seite (S2-2) aufweist, wobei die erste Seite (S1-2) und die zweite Seite (S2-2) jeweils eine Schäumhaut aufweisen,
c) Einbringen von Strukturierungen in die erste Seite (S1-1) der ersten dünneren thermoplastischen Schaumstoffplatte (T1),
d) Entfernen der Schäumhaut von der zweiten Seite (S2-1) der ersten dünneren thermoplastischen Schaumstoffplatte (T1),
e) Entfernen der Schäumhaut von der ersten Seite (S1-2) der zweiten dünneren thermoplastischen Schaumstoffplatte (T2),
f) Verbinden der zweiten Seite (S2-1) der ersten dünneren thermoplastischen Schaumstoffplatte (T1) mit der ersten Seite (S1-2) der zweiten dünneren thermoplastischen Schaumstoffplatte (T2) unter Erhalt der zumindest zweilagigen einseitig strukturierten thermoplastischen Schaumstoffplatte,
wobei die Schritte a) bis e) vor Schritt f) durchgeführt werden und wobei die Schritte c), d) und e) in beliebiger Reihenfolge durchgeführt werden.

2. Verfahren gemäß Anspruch 1, **dadurch gekennzeichnet, dass** zusätzlich die folgenden Schritte g) bis j) durchgeführt werden:
g) Bereitstellung einer dritten dünneren thermoplastischen Schaumstoffplatte (T3), die eine erste Seite (S1-3) und eine zweite Seite (S2-3) aufweist, wobei die erste Seite (S1-3) und die zweite Seite (S2-3) jeweils eine Schäumhaut aufweisen,
h) Entfernen der Schäumhaut von der ersten Seite (S1-3) der dritten dünneren thermoplastischen Schaumstoffplatte (T3),
i) Entfernen der Schäumhaut von der zweiten Seite (S2-2) der zweiten dünneren thermoplastischen Schaumstoffplatte (T2),
j) Verbinden der ersten Seite (S1-3) der dritten dünneren thermoplastischen Schaumstoffplatte (T3) mit der zweiten Seite (S2-2) der zweiten dünneren thermoplastischen Schaumstoffplatte (T2),
wobei die Schritte f) und j) in beliebiger Reihenfolge oder gleichzeitig durchgeführt werden.

3. Verfahren gemäß Anspruch 1 oder 2, **dadurch gekennzeichnet, dass** die Strukturierungen in die erste Seite (S1-1) der ersten dünneren thermoplastischen Schaumstoffplatte (T1) in Schritt c) eingebracht werden durch Fräsen und/oder Prägen.

4. Verfahren gemäß einem der Ansprüche 1 bis 3, **dadurch gekennzeichnet, dass** in Schritt c) zusätzlich Strukturierungen in die zweite Seite (S2-1) der ersten dünneren thermoplastischen Schaumstoffplatte (T1) eingebracht werden, wobei Schritt c) vor Schritt d) durchgeführt wird, vorzugsweise werden in Schritt c) zusätzlich Strukturierungen in die zweite Seite (S2-1) der ersten dünneren thermoplastischen Schaumstoffplatte (T1) eingebracht durch Fräsen und/oder Prägen, wobei Schritt c) vor Schritt d) durchgeführt wird.

5. Verfahren gemäß einem der Ansprüche 1 bis 4, **dadurch gekennzeichnet, dass**
I) die in Schritt a) bereitgestellte erste dünnere thermoplastische Schaumstoffplatte (T1) ein Partikelschaumstoff oder ein Extrusionsschaumstoff ist auf Basis eines Polymers, ausgewählt aus der Gruppe bestehend aus Polystyrol, Polystyrolcopolymeren, Polyethersulfon, Polysulfon, Polyethylenterephthalat, Polyurethan, Polyolefinen, Polyolefincopolymeren und Acrylpolymeren, vorzugsweise ein Extrusionsschaumstoff auf Basis eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Extrusionsschaumstoff auf Basis eines Polymers, ausgewählt aus der Gruppe bestehend aus Polystyrol, Polystyrolcopolymeren und Polyethylenterephthalat, und/oder
II) die in Schritt b) bereitgestellte zweite dünnere thermoplastische Schaumstoffplatte (T2) ein Partikelschaumstoff oder ein Extrusionsschaumstoff ist auf Basis eines Polymers, ausgewählt aus der Gruppe bestehend aus Polystyrol, Polystyrolcopolymeren, Polyethersulfon, Polysulfon, Polyethylenterephthalat, Polyurethan, Polyolefinen, Polyolefincopolymeren und Acrylpolymeren, vorzugsweise ein Extrusionsschaumstoff auf Basis eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Extrusionsschaumstoff auf Basis eines Polymers, ausgewählt aus der Gruppe bestehend aus Polystyrol, Polystyrolcopolymeren und Polyethylenterephthala, und/oder
III) die in Schritt g) bereitgestellte dritte dünnere thermoplastische Schaumstoffplatte (T3) ein Partikelschaumstoff oder ein Extrusionsschaumstoff ist auf Basis eines Polymers, ausgewählt aus der Gruppe bestehend aus Polystyrol, Polystyrolcopolymeren, Polyethersulfon, Polysulfon, Polyethylenterephthalat, Polyurethan, Polyolefinen, Polyolefincopolymeren und Acrylpolymeren, vorzugsweise ein Extrusionsschaumstoff auf Basis eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Extrusionsschaumstoff auf Basis eines Polymers, ausgewählt aus der Gruppe bestehend aus Polystyrol, Polystyrolcopolymeren und Polyethylenterephthalat.

6. Verfahren gemäß einem der Ansprüche 1 bis 5, **dadurch gekennzeichnet, dass**
I) in Schritt d) die Schäumhaut von der zweiten Seite (S2-1) der ersten dünneren thermoplastischen Schaumstoffplatte (T1) entfernt wird durch Hobeln, Fräsen, Sägen und/oder Glühdrahtschneiden, und/oder
II) in Schritt e) die Schäumhaut von der ersten Seite (S1-2) der zweiten dünneren thermoplastischen Schaumstoffplatte (T2) entfernt wird durch Hobeln, Fräsen, Sägen und/oder Glühdrahtschneiden, und/oder
III) in Schritt h) die Schäumhaut von der ersten Seite (S1-3) der dritten dünneren thermoplastischen Schaumstoffplatte (T3) entfernt wird durch Hobeln, Fräsen, Sägen und/oder Glühdrahtschneiden, und/oder
IV) in Schritt i) die Schäumhaut von der zweiten Seite (S2-2) der zweiten dünneren thermoplastischen Schaumstoffplatte (T2) entfernt wird durch Hobeln, Fräsen, Sägen und/oder Glühdrahtschneiden.

7. Verfahren gemäß einem der Ansprüche 1 bis 6, **dadurch gekennzeichnet, dass**
I) in Schritt f) die zweite Seite (S2-1) der ersten dünneren thermoplastischen Schaumstoffplatte (T1) mit der ersten Seite (S1-2) der zweiten dünneren thermoplastischen Schaumstoffplatte (T2) verbunden wird durch Verschweißen oder Verkleben, und/oder
II) in Schritt j) die zweite Seite (S2-2) der zweiten dünneren thermoplastischen Schaumstoffplatte (T2) mit der ersten Seite (S1-3) der dritten dünneren thermoplastischen Schaumstoffplatte (T3) verbunden wird durch Verschweißen oder Verkleben.

8. Verfahren gemäß einem der Ansprüche 1 bis 7, **dadurch gekennzeichnet, dass**
I) in Schritt f) die zweite Seite (S2-1) der ersten dünneren thermoplastischen Schaumstoffplatte (T1) mit der ersten Seite (S1-2) der zweiten dünneren thermoplastischen Schaumstoffplatte (T2) verbunden wird durch Verschweißen, wobei das Verschweißen die folgenden Schritte umfasst:
f1) die zweite Seite (S2-1) der ersten dünneren thermoplastischen Schaumstoffplatte (T1) wird in einem Abstand (a) parallel zu der ersten Seite (S1-2) der zweiten dünneren thermoplastischen Schaumstoffplatte (T2) ausgerichtet, sodass sie einen Zwischenraum ausbilden,
f2) in den Zwischenraum werden mindestens zwei Heizelemente auf parallel zueinander versetzten Ebenen und parallel zu der zweiten Seite (S2-1) der ersten dünneren thermoplastischen Schaumstoffplatte (T1) und der ersten Seite (S1-2) der zweiten dünneren thermoplastischen Schaumstoffplatte (T2) eingeführt, wobei sich die zweite Seite (S2-1), die erste Seite (S1-2) und die Heizelemente nicht gegenseitig berühren,
f3) die Heizelemente werden so weit zwischen die erste dünnere thermoplastische Schaumstoffplatte (T1) und die zweite dünnere thermoplastische Schaumstoffplatte (T2) eingeführt, bis zwischen der ersten dünneren thermoplastischen Schaumstoffplatte (T1) und der zweiten dünneren thermoplastischen Schaumstoffplatte (T2), bezogen auf jede Stelle der ersten Seite (S1-2) und der zweiten Seite (S2-1), zumindest zeitweise sich mindestens eines der Heizelemente befunden hat,
f4) die Heizelemente werden vollständig aus dem Zwischenraum wieder entfernt,
f5) die erste dünnere thermoplastische Schaumstoffplatte (T1) wird gegen die erste Seite (S1-2) der zweiten dünneren thermoplastischen Schaumstoffplatte (T2) gedrückt und/oder die zweite dünnere thermoplastische Schaumstoffplatte (T2) wird gegen die zweite Seite (S2-1) der ersten dünneren thermoplastischen Schaumstoffplatte (T1) gedrückt unter Erhalt der zumindest zweilagigen einseitig strukturierten thermoplastischen Schaumstoffplatte, und/oder
II) in Schritt j) die zweite Seite (S2-2) der zweiten dünneren thermoplastischen Schaumstoffplatte (T2) mit der ersten Seite (S1-3) der dritten dünneren thermoplastischen Schaumstoffplatte (T3) verbunden wird durch Verschweißen wobei das Verschweißen die folgenden Schritte umfasst:
j1) die zweite Seite (S2-2) der zweiten dünneren thermoplastischen Schaumstoffplatte (T2) wird in einem Abstand (a) parallel zu der ersten Seite (S1-3) der dritten dünneren thermoplastischen Schaumstoffplatte (T3) ausgerichtet, sodass sie einen Zwischenraum ausbilden,
j2) in den Zwischenraum werden mindestens zwei Heizelement auf parallel zueinander versetzten Ebenen und parallel zu der zweiten Seite (S2-2) der zweiten dünneren thermoplastischen Schaumstoffplatte (T2) und der ersten Seite (S1-3) der dritten dünneren thermoplastischen Schaumstoffplatte (T3) eingeführt, wobei sich die zweite Seite (S2-2), die erste Seite (S1-3) und die Heizelemente nicht gegenseitig berühren,
j3) die Heizelemente werden so weit zwischen die zweite dünnere thermoplastische Schaumstoffplatte (T2) und die dritte dünnere thermoplastische Schaumstoffplatte (T3) eingeführt, bis zwischen der zweiten dünneren thermoplastischen Schaumstoffplatte (T2) und der dritten dünneren thermoplastischen Schaumstoffplatte (T3), bezogen auf jede Stelle der ersten Seite (S1-3) und der zweiten Seite (S2-2), zumindest zeitweise sich mindestens eines der Heizelemente befunden hat,
j4) die Heizelemente werden vollständig aus dem Zwischenraum wieder entfernt,
j5) die zweite dünnere thermoplastische Schaumstoffplatte (T2) wird gegen die erste Seite (S1-3) der dritten dünneren thermoplastischen Schaumstoffplatte (T3) gedrückt und/oder die dritte dünnere thermoplastische Schaumstoffplatte (T3) wird gegen die zweite Seite (S2-2) der zweiten dünneren thermoplastischen Schaumstoffplatte (T2) gedrückt.

9. Verfahren gemäß einem der Ansprüche 1 bis 8, **dadurch gekennzeichnet, dass**
I) in Schritt f) die zweite Seite (S2-1) der ersten dünneren thermoplastischen Schaumstoffplatte (T1) mit der ersten Seite (S1-2) der zweiten dünneren thermoplastischen Schaumstoffplatte (T2) verbunden wird durch Verschweißen, wobei sich eine Schweißnaht ausbildet, die eine Dicke im Bereich von 30 bis 200 µm, vorzugsweise im Bereich von 50 bis 150 µm, mehr bevorzugt im Bereich von 80 bis 100 µm aufweist, und/oder
II) in Schritt j) die zweite Seite (S2-2) der zweiten dünneren thermoplastischen Schaumstoffplatte (T2) mit der ersten Seite (S1-3) der dritten dünneren thermoplastischen Schaumstoffplatte (T3) verbunden wird durch Verschweißen, wobei sich eine Schweißnaht ausbildet, die eine Dicke im Bereich von 30 bis 200 µm, vorzugsweise im Bereich von 50 bis 150 µm, mehr bevorzugt im Bereich von 80 bis 100 µm aufweist.

10. Verfahren gemäß einem der Ansprüche 1 bis 9, **dadurch gekennzeichnet, dass**
I) die in Schritt a) bereitgestellte erste dünnere thermoplastische Schaumstoffplatte (T1) eine Länge (x-Richtung) im Bereich von 500 bis 2800 mm, vorzugsweise im Bereich von 1000 bis 1500 mm, eine Breite (y-Richtung) im Bereich von 500 bis 1250 mm, vorzugsweise im Bereich von 500 bis 900 mm, und eine Dicke (z-Richtung) im Bereich von 20 bis 200 mm, vorzugsweise im Bereich von 50 bis 100 mm, aufweist, und/oder
II) die in Schritt b) bereitgestellte zweite dünnere thermoplastische Schaumstoffplatte (T2) eine Länge (x-Richtung) im Bereich von 500 bis 2800 mm, vorzugsweise im Bereich von 1000 bis 1500 mm, eine Breite (y-Richtung) im Bereich von 500 bis 1250 mm, vorzugsweise im Bereich von 500 bis 900 mm, und eine Dicke (z-Richtung) im Bereich von 20 bis 200 mm, vorzugsweise im Bereich von 50 bis 100 mm, aufweist, und/oder
III) die in Schritt g) bereitgestellte dritte dünnere thermoplastische Schaumstoffplatte (T3) eine Länge (x-Richtung) im Bereich von 500 bis 2800 mm, vorzugsweise im Bereich von 1000 bis 1500 mm, eine Breite (y-Richtung) im Bereich von 500 bis 1250 mm, vorzugsweise im Bereich von 500 bis 900 mm, und eine Dicke (z-Richtung) im Bereich von 20 bis 200 mm, vorzugsweise im Bereich von 50 bis 100 mm, aufweist.

11. Verfahren gemäß einem der Ansprüche 1 bis 10, **dadurch gekennzeichnet, dass**
I) die erste Seite (S1-1) der ersten dünneren thermoplastischen Schaumstoffplatte (T1) der zweiten Seite (S2-1) der ersten dünneren thermoplastischen Schaumstoffplatte (T1) gegenüberliegt, und/oder
II) die erste Seite (S1-2) der zweiten dünneren thermoplastischen Schaumstoffplatte (T2) der zweiten Seite (S2-2) der zweiten dünneren thermoplastischen Schaumstoffplatte (T2) gegenüberliegt, und/oder
III) die erste Seite (S1-3) der dritten dünneren thermoplastischen Schaumstoffplatte (T3) der zweiten Seite (S2-3) der dritten dünneren thermoplastischen Schaumstoffplatte (T3) gegenüberliegt.

12. Verfahren gemäß einem der Ansprüche 1 bis 11, **dadurch gekennzeichnet, dass**
I) die erste dünnere thermoplastische Schaumstoffplatte (T1) die gleichen Dimensionen in Länge und Breite aufweist wie die zweite dünnere thermoplastische Schaumstoffplatte (T2), und/oder
II) die zweite dünnere thermoplastische Schaumstoffplatte (T2) die gleichen Dimensionen in Länge und Breite aufweist wie die dritte dünnere thermoplastische Schaumstoffplatte (T3), und/oder
III) die erste dünnere thermoplastische Schaumstoffplatte (T1) der gleiche Partikelschaumstoff oder Extrusionsschaumstoff ist wie die zweite dünnere thermoplastische Schaumstoffplatte (T2), und/oder
IV) die zweite dünnere thermoplastische Schaumstoffplatte (T2) der gleiche Partikelschaumstoff oder Extrusionsschaumstoff ist wie die dritte thermoplastische Schaumstoffplatte (T3).

13. Verfahren gemäß einem der Ansprüche 1 bis 12, **dadurch gekennzeichnet, dass**
I) die erste Seite (S1-1) und/oder die zweite Seite (S2-1) der ersten dünneren thermoplastischen Schaumstoffplatte (T1) die flächenmäßig größte Seite der ersten dünneren thermoplastischen Schaumstoffplatte (T1) ist, und/oder
II) die erste Seite (S1-2) und/oder die zweite Seite (S2-2) der zweiten dünneren thermoplastischen Schaumstoffplatte (T2) die flächenmäßig größte Seite der zweiten dünneren thermoplastischen Schaumstoffplatte (T2) ist, und/oder
III) die erste Seite (S1-3) und/oder die zweite Seite (S2-3) der dritten dünneren thermoplastischen Schaumstoffplatte (T3) die flächenmäßig größte Seite der dritten dünneren thermoplastischen Schaumstoffplatte (T3) ist.

14. Verfahren gemäß einem der Ansprüche 2 bis 13, **dadurch gekennzeichnet, dass** die Schritte f) und j) gleichzeitig durchgeführt werden.

15. Zumindest zweilagige einseitig strukturierte thermoplastische Schaumstoffplatte, erhältlich nach einem Verfahren gemäß einem der Ansprüche 1 bis 14.
